# EUROPEAN PATENT SPECIFICATION

(11) **EP 4 202 699 B1**
(45) Date of publication and mention of the grant of the patent: **18.12.2024**
(21) Application number: 22208696.9
(22) Date of filing: 22.11.2022
(51) Int. Cl.: G06F 12/1027, G06F 13/28, G06F 13/42, G06F 9/455

(54) **DYNAMIC ON-DEMAND DEVICE-ASSISTED PAGING**
DYNAMISCHER BEDARFSABHÄNGIGER VORRICHTUNGSUNTERSTÜTZTER FUNKRUF
RADIOMESSAGERIE ASSISTÉE PAR DISPOSITIF À LA DEMANDE DYNAMIQUE

(30) Priority: 23.12.2021 US 202117560826
(43) Date of publication of application: 28.06.2023
(73) Proprietor: INTEL Corporation, Santa Clara, CA 95054 (US)
(72) Inventor: RAJ, Ashok, Portland, 97229 (US); SANKARAN, Rajesh, Portland, 97229 (US); JAIN, Anjali, Portland, 97229 (US); Maloney, Patrick, Portland, 97219 (US)
(74) Representative: Goddar, Heinz J.

(56) References cited:
- FUKUOKA TAKUYA ET AL: "Pitfalls of InfiniBand with On-Demand Paging", 2021 IEEE INTERNATIONAL SYMPOSIUM ON PERFORMANCE ANALYSIS OF SYSTEMS AND SOFTWARE (ISPASS), IEEE, 28 March 2021 (2021-03-28), pages 265 - 275, XP033907136, DOI: 10.1109/ISPASS51385.2021.00049
- ILYA LESOKHIN ET AL: "Page Fault Support for Network Controllers", ACM SIGPLAN NOTICES, ASSOCIATION FOR COMPUTING MACHINERY, US, vol. 52, no. 4, 4 April 2017 (2017-04-04), pages 449 - 466, XP058338272, ISSN: 0362-1340, DOI: 10.1145/3093336.3037710
- TIAN KUN ET AL: "coIOMMU: A Virtual IOMMU with Cooperative DMA Buffer Tracking for Efficient Memory Management in Direct I/O", THIS PAPER IS INCLUDED IN THE PROCEEDINGS OF THE 2020 USENIX ANNUAL TECHNICAL CONFERENCE, 15 July 2020 (2020-07-15), pages 1 - 15, XP093044632, Retrieved from the Internet <URL:https://www.usenix.org/system/files/atc20-tian.pdf> [retrieved on 20230505]

## Description

### Background

This disclosure relates to efficient input/output (I/O) page fault handling for devices in connection with a virtual machine.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be noted that these statements are to be read in this light, and not as admissions of any kind.

Virtualized datacenters are used extensively to provide digital services including web hosting, streaming services, remote computing, and more. Virtualized datacenters are highly scalable. Virtualization allows the creation of multiple simulated environments, operating systems (OS), or dedicated resources from a single, physical hardware system. Virtualization is implemented using software, such as a virtual machine manager (VMM), which is also sometimes referred to as a hypervisor, to manage software known as a "guest" or virtual machine (VM). A virtual machine is software that, when executed on appropriate hardware, creates an environment allowing for the abstraction of an actual physical computer system also referred to as a "host" or "host machine." In other words, a virtual machine is software that simulates a physical computer system. There may be multiple virtual machines running on a single host machine. Like physical computer systems, each virtual machine may run its own guest operating system (OS) and applications, as well as interact with peripheral devices such as Peripheral Component Interconnect express (PCIe) devices.

Some peripheral devices may interact with virtual machines using Single Root-Input/Output Virtualization (SR-IOV) or Scalable Input/Output Virtualization (SIOV) and may access memory of the virtual machines using a form of Direct Memory Access (DMA) through Address Translation Service (ATS). When the peripheral device attempts to access memory of the virtual machine and there is a page fault, the peripheral device may wait while the host resolves the page fault. When the peripheral device is to perform a DMA to system memory, and if the page isn't mapped in by the OS, the peripheral device needs to first fault the page in, then obtain the translation, then restart the DMA. On high speed network devices, this can introduce substantial delay before the fault is resolved and restarting the DMA operation. One way to avoid page faults is to "pin" memory to the virtual machine. Pinned memory is part of a physical memory that is defined to be used exclusively by certain software, such as by a particular virtual machine. While this protects against page faults in the memory of the virtual machine, pinning the memory prevents other virtual machines from using the same underlying physical memory. Accordingly, this may limit the number of virtual machines that can be accommodated by a single host machine.

The article "Pitfalls of InfiniBand with On-Demand Paging" by FUKUOKA TAKUYA ET AL: , 2021 IEEE INTERNATIONAL SYMPOSIUM ON PERFORMANCE ANALYSIS OF SYSTEMS AND SOFTWARE (ISPASS), IEEE, 28 March 2021 (2021-03-28), pages 265-275, DOI: 10.1109/ ISPASS51385.2021.00049 describes On-Demand-Paging in the context of InfiniBand. The article states that ODP has to appropriately handle packets that result in page faults and that RNICs rely on a retransmission mechanism without storing pending packets locally. Specifically, RNICs leverage RNR NAK for suspending senders of a packet that causes a page fault. Receivers do not have to store any dropped packets until RNR NAK reaches either because the reliability of InfiniBand guarantees to leave them on the sender side.

### Summary of the Invention

The subject-matter for which protection is sought is defined by the appended claims.

### Brief Description of the Drawings

Various aspects of this disclosure may be better understood upon reading the following detailed description and upon reference to the drawings in which:
FIG. 1 is a block diagram of a register architecture, in accordance with an embodiment;
FIG. 2A is a block diagram illustrating an in-order pipeline and a register renaming, out-of-order issue/execution pipeline, in accordance with an embodiment;
FIG. 2B is a block diagram illustrating an in-order architecture core and a register renaming, out-of-order issue/execution architecture core to be included in a processor, in accordance with an embodiment;
FIGS. 3A and 3B illustrate a block diagram of a more specific example in-order core architecture, which core would be one of several logic blocks (including other cores of the same type and/or different types) in a chip, in accordance with an embodiment;
FIG. 4 is a block diagram of a processor that may have more than one core, may have an integrated memory controller, and may have integrated graphics, in accordance with an embodiment;
FIG. 5 shown a block diagram of a system, in accordance with an embodiment;
FIG. 6 is a block diagram of a first more specific example system, in accordance with an embodiment;
FIG. 7 is a block diagram of a second more specific example system, in accordance with an embodiment;
FIG. 8 is a block diagram of a system on a chip (SoC), in accordance with an embodiment;
FIG. 9 is a block diagram contrasting the use of a software instruction converter to convert binary instructions in a source instruction set to binary instructions in a target instruction set, in accordance with an embodiment;
FIG. 10 is a block diagram illustrating the use of a virtualized datacenter to provide cloud computing features to end user devices, in accordance with an embodiment;
FIG. 11 is a block diagram of a start of a live migration in which a virtual machine is transferred from one physical processing device to another, in accordance with an embodiment;
FIG. 12 is a block diagram of an abbreviated blackout period of the live migration during which the virtual machine is inaccessible, in accordance with an embodiment;
FIG. 13 is a block diagram of a point in the live migration when the virtual machine may be accessed in its new physical processing device but is vulnerable to page faults because not all of the memory of the virtual machine has been fully transferred from the original physical processing device, in accordance with an embodiment;
FIG. 14 is a block diagram of an end of the live migration when the virtual machine and its memory has been fully transferred and no longer resides on the original physical processing device, in accordance with an embodiment;
FIG. 15 is a block diagram of multiple virtual machines using overcommitted memory that may be vulnerable to page faults, in accordance with an embodiment;
FIG. 16 is a block diagram of a virtualized datacenter system that uses on-demand paging through Address Translation Service (ATS) to enable efficient, effective page fault handling from a peripheral device, in accordance with an embodiment;
FIG. 17 is a diagram illustrating fault buffer queue interleaving for handling page faults for different virtual machines, in accordance with an embodiment;
FIG. 18 is a flowchart of a method for performing on-demand paging through Address Translation Service (ATS), in accordance with an embodiment;
FIG. 19 is a flow diagram illustrating a manner in which different components of the virtualized datacenter system perform on-demand paging through Address Translation Service (ATS), in accordance with an embodiment;
FIG. 20 is flow diagram illustrating a particular use case of on-demand paging through Address Translation Service (ATS) in the context of receiving data packets at a network interface card (NIC), in accordance with an embodiment; and
FIG. 21 is a block diagram of a virtualized datacenter system that uses on-demand paging through Address Translation Service (ATS) for a trusted device, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "including" and "having" are intended to be inclusive and mean that there may be additional elements other than the listed elements. Additionally, it should be understood that references to "some embodiments," "embodiments," "one embodiment," or "an embodiment" of the present disclosure are not intended to be interpreted as excluding the existence of additional embodiments that also incorporate the recited features. Furthermore, the phrase A "based on" B is intended to mean that A is at least partially based on B. Moreover, the term "or" is intended to be inclusive (e.g., logical OR) and not exclusive (e.g., logical XOR). In other words, the phrase A "or" B is intended to mean A, B, or both A and B. Moreover, this disclosure describes various data structures, such as instructions for an instruction set architecture. These are described as having certain domains (e.g., fields) and corresponding numbers of bits. However, it should be understood that these domains and sizes in bits are meant as examples and are not intended to be exclusive. Indeed, the data structures (e.g., instructions) of this disclosure may take any suitable form.

This disclosure describes systems and methods that allow a peripheral device to perform direct memory access (DMA) to a pre-allocated page, communicating with the device driver to work with the OS to resolve a fault using the page that has the data. By using a configurable set of buffers to manage this pre-faulting, some of the latencies involved can be eliminated or reduced significantly.

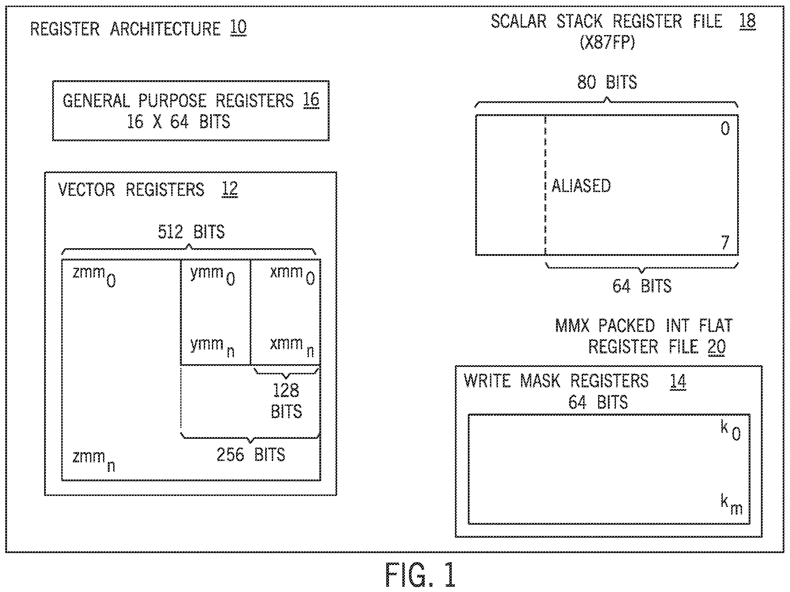

These features may be implemented using any suitable integrated circuit devices that may be used as physical processing devices on which a virtual datacenter may run. The following architecture discussed below with respect to FIGS. 1-9 is intended to represent one example that may be used.

### Register Architecture

FIG. 1 is a block diagram of a register architecture 10, in accordance with an embodiment. In the embodiment illustrated, there are a number (e.g., 32) of vector registers 12 that may be a number (e.g., 512) of bits wide. In the register architecture 10; these registers are referenced as zmm0 through zmmᵢ. The lower order (e.g., 256) bits of the lower n (e.g., 16) zmm registers are overlaid on corresponding registers ymm. The lower order (e.g., 128 bits) of the lower n zmm registers that are also the lower order n bits of the ymm registers are overlaid on corresponding registers xmm.

Write mask registers 14 may include m (e.g., 8) write mask registers (k0 through km), each having a number (e.g., 64) of bits. Additionally or alternatively, at least some of the write mask registers 14 may have a different size (e.g., 16 bits). At least some of the vector mask registers 12 (e.g., k0) are prohibited from being used as a write mask. When such vector mask registers are indicated, a hardwired write mask (e.g., 0xFFFF) is selected and, effectively disabling write masking for that instruction.

General-purpose registers 16 may include a number (e.g., 16) of registers having corresponding bit sizes (e.g., 64) that are used along with x86 addressing modes to address memory operands. These registers may be referenced by the names RAX, RBX, RCX, RDX, RBP, RSI, RDI, RSP, and R8 through R15. Parts (e.g., 32 bits of the registers) of at least some of these registers may be used for modes (e.g., 32-bit mode) that is shorter than the complete length of the registers.

Scalar floating-point stack register file (x87 stack) 18 has an MMX packed integer flat register file 20 is aliased. The x87 stack 18 is an eight-element (or other number of elements) stack used to perform scalar floating-point operations on floating point data using the x87 instruction set extension. The floating-point data may have various levels of precision (e.g., 16, 32, 64, 80, or more bits). The MMX packed integer flat register files 20 are used to perform operations on 64-bit packed integer data, as well as to hold operands for some operations performed between the MMX packed integer flat register files 20 and the XMM registers.

Alternative embodiments may use wider or narrower registers. Additionally, alternative embodiments may use more, less, or different register files and registers.

### Core Architectures, Processors, and Computer Architectures

Processor cores may be implemented in different ways, for different purposes, and in different processors. For instance, implementations of such cores may include: 1) a general purpose in-order core suitable for general-purpose computing; 2) a high performance general purpose out-of-order core suitable for general-purpose computing; 3) a special purpose core suitable for primarily for graphics and/or scientific (throughput) computing. Implementations of different processors may include: 1) a CPU including one or more general purpose in-order cores suitable for general-purpose computing and/or one or more general purpose out-of-order cores suitable for general-purpose computing; and 2) a coprocessor including one or more special purpose cores primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Example core architectures are described next, followed by descriptions of example processors and computer architectures.

### In-Order and Out-of-Order Core Architecture

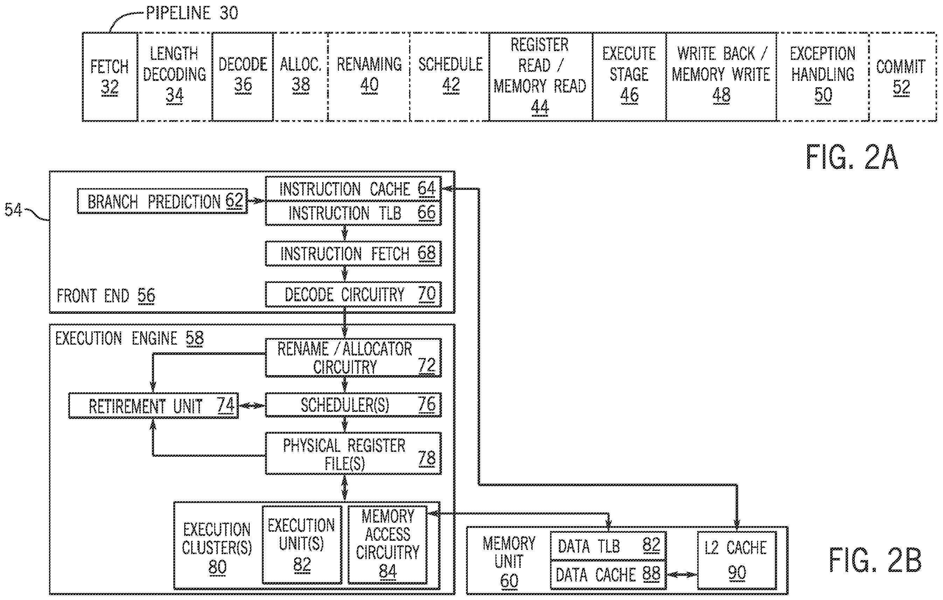

FIG. 2A is a block diagram illustrating an in-order pipeline and a register renaming, out-of-order issue/execution pipeline according to an embodiment of the disclosure. FIG. 2B is a block diagram illustrating both an embodiment of an in-order architecture core and an example register renaming, out-of-order issue/execution architecture core to be included in a processor according to embodiments. The solid lined boxes in FIGS. 2A and 2B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 2A, a pipeline 30 in the processor includes a fetch stage 32, a length decode stage 34, a decode stage 36, an allocation stage 38, a renaming stage 40, a scheduling (also known as a dispatch or issue) stage 42, a register read/memory read stage 44, an execute stage 46, a write back/memory write stage 48, an exception handling stage 50, and a commit stage 52.

FIG. 2B shows a processor core 54 including a front-end unit 56 coupled to an execution engine unit 58, and both are coupled to a memory unit 60. The processor core 54 may be a reduced instruction set computing (RISC) core, a complex instruction set computing (CISC) core, a very long instruction word (VLIW) core, or a hybrid or alternative core type. As yet another option, the processor core 54 may be a special-purpose core, such as, for example, a network or communication core, compression engine, coprocessor core, general purpose computing graphics processing unit (GPGPU) core, graphics core, or the like.

The front-end unit 56 includes a branch prediction unit 62 coupled to an instruction cache unit 64 that is coupled to an instruction translation lookaside buffer (TLB) 66. The TLB 66 is coupled to an instruction fetch unit 68. The instruction fetch unit 68 is coupled to a decode circuitry 70. The decode circuitry 70 (or decoder) may decode instructions and generate as an output one or more micro-operations, micro-code entry points, microinstructions, other instructions, or other control signals, which are decoded from, or which otherwise reflect, or are derived from, the original instructions. The decode circuitry 70 may be implemented using various different mechanisms. Examples of suitable mechanisms include, but are not limited to, look-up tables, hardware implementations, programmable logic arrays (PLAs), microcode read only memories (ROMs), etc. The processor core 54 may include a microcode ROM or other medium that stores microcode for macroinstructions (e.g., in decode circuitry 70 or otherwise within the front-end unit 56). The decode circuitry 70 is coupled to a rename/allocator unit 72 in the execution engine unit 58.

The execution engine unit 58 includes a rename/allocator unit 72 coupled to a retirement unit 74 and a set of one or more scheduler unit(s) 76. The scheduler unit(s) 76 represents any number of different schedulers, including reservations stations, central instruction window, etc. The scheduler unit(s) 76 is coupled to physical register file(s) unit(s) 78. Each of the physical register file(s) unit(s) 78 represents one or more physical register files storing one or more different data types, such as scalar integers, scalar floating points, packed integers, packed floating points, vector integers, vector floating points, statuses (e.g., an instruction pointer that is the address of the next instruction to be executed), etc. In one embodiment, the physical register file(s) unit(s) 78 includes the vector registers 12, the write mask registers 14, and/or the x87 stack 18. These register units may provide architectural vector registers, vector mask registers, and general-purpose registers. The physical register file(s) unit(s) 78 is overlapped by the retirement unit 74 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.).

The retirement unit 74 and the physical register file(s) unit(s) 78 are coupled to an execution cluster(s) 80. The execution cluster(s) 80 includes a set of one or more execution units 82 and a set of one or more memory access circuitries 84. The execution units 82 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform multiple different functions. The scheduler unit(s) 76, physical register file(s) unit(s) 78, and execution cluster(s) 80 are shown as being singular or plural because some processor cores 54 create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster. In the case of a separate memory access pipeline, a processor core 54 for the separate memory access pipeline is the only the execution cluster 80 that has the memory access circuitry 84). It should also be understood that where separate pipelines are used, one or more of these pipelines may be out-of-order issue/execution and the rest perform in-order execution.

The set of memory access circuitry 84 is coupled to the memory unit 60. The memory unit 60 includes a data TLB unit 86 coupled to a data cache unit 88 coupled to a level 2 (L2) cache unit 90. The memory access circuitry 84 may include a load unit, a store address unit, and a store data unit, each of which is coupled to the data TLB unit 86 in the memory unit 60. The instruction cache unit 64 is further coupled to the level 2 (L2) cache unit 90 in the memory unit 60. The L2 cache unit 90 is coupled to one or more other levels of caches and/or to a main memory.

By way of example, the register renaming, out-of-order issue/execution core architecture may implement the pipeline 30 as follows: 1) the instruction fetch unit 68 performs the fetch and length decoding stages 32 and 34 of the pipeline 30; 2) the decode circuitry 70 performs the decode stage 36 of the pipeline 30; 3) the rename/allocator unit 72 performs the allocation stage 38 and renaming stage 40 of the pipeline; 4) the scheduler unit(s) 76 performs the schedule stage 42 of the pipeline 30; 5) the physical register file(s) unit(s) 78 and the memory unit 60 perform the register read/memory read stage 44 of the pipeline 30; the execution cluster 80 performs the execute stage 46 of the pipeline 30; 6) the memory unit 60 and the physical register file(s) unit(s) 78 perform the write back/memory write stage 48 of the pipeline 30; 7) various units may be involved in the exception handling stage 50 of the pipeline; and/or 8) the retirement unit 74 and the physical register file(s) unit(s) 78 perform the commit stage 52 of the pipeline 30.

The processor core 54 may support one or more instructions sets, such as an x86 instruction set (with or without additional extensions for newer versions); a MIPS instruction set of MIPS Technologies of Sunnyvale, CA; an ARM instruction set (with optional additional extensions such as NEON) of ARM Holdings of Sunnyvale, CA). Additionally or alternatively, the processor core 54 includes logic to support a packed data instruction set extension (e.g., AVX1, AVX2), thereby allowing the operations used by multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof, such as a time-sliced fetching and decoding and simultaneous multithreading in INTEL^{®} Hyperthreading technology.

While register renaming is described in the context of out-of-order execution, register renaming may be used in an in-order architecture. While the illustrated embodiment of the processor also includes a separate instruction cache unit 64, a separate data cache unit 88, and a shared L2 cache unit 90, some processors may have a single internal cache for both instructions and data, such as, for example, a Level 1 (L1) internal cache, or multiple levels of the internal cache. In some embodiments, the processor may include a combination of an internal cache and an external cache that is external to the processor core 54 and/or the processor. Alternatively, some processors may use a cache that is external to the processor core 54 and/or the processor.

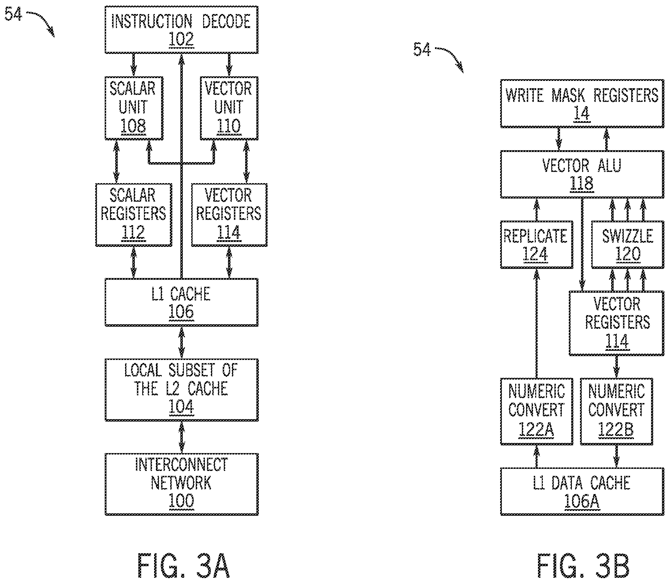

FIGS. 3A and 3B illustrate more detailed block diagrams of an in-order core architecture. The processor core 54 includes one or more logic blocks (including other cores of the same type and/or different types) in a chip. The logic blocks communicate through a high-bandwidth interconnect network (e.g., a ring network) with some fixed function logic, memory I/O interfaces, and other I/O logic, depending on the application.

FIG. 3A is a block diagram of a single processor core 54, along with its connection to an on-die interconnect network 100 and with its local subset of the Level 2 (L2) cache 104, according to embodiments of the disclosure. In one embodiment, an instruction decoder 102 supports the x86 instruction set with a packed data instruction set extension. An L1 cache 106 allows low-latency accesses to cache memory into the scalar and vector units. While in one embodiment (to simplify the design), a scalar unit 108 and a vector unit 110 use separate register sets (respectively, scalar registers 112 (e.g., x87 stack 18) and vector registers 114 (e.g., vector registers 12) and data transferred between them is written to memory and then read back in from a level 1 (L1) cache 106, alternative embodiments of the disclosure may use a different approach (e.g., use a single register set or include a communication path that allow data to be transferred between the two register files without being written and read back).

The local subset of the L2 cache 104 is part of a global L2 cache unit 90 that is divided into separate local subsets, one per processor core. Each processor core 54 has a direct access path to its own local subset of the L2 cache 104. Data read by a processor core 54 is stored in its L2 cache 104 subset and can be accessed quickly, in parallel with other processor cores 54 accessing their own local L2 cache subsets. Data written by a processor core 54 is stored in its own L2 cache 104 subset and is flushed from other subsets, if necessary. The interconnection network 100 ensures coherency for shared data. The interconnection network 100 is bi-directional to allow agents such as processor cores, L2 caches, and other logic blocks to communicate with each other within the chip. Each data-path may have a number (e.g.,1012) of bits in width per direction.

FIG. 3B is an expanded view of part of the processor core in FIG. 3A according to embodiments of the disclosure. FIG. 3B includes an L1 data cache 106A part of the L1 cache 106, as well as more detail regarding the vector unit 110 and the vector registers 114. Specifically, the vector unit 110 may be a vector processing unit (VPU) (e.g., a vector arithmetic logic unit (ALU) 118) that executes one or more of integer, single-precision float, and double-precision float instructions. The VPU supports swizzling the register inputs with swizzle unit 120, numeric conversion with numeric convert units 122A and 122B, and replication with replication unit 124 on the memory input. The write mask registers 14 allow predicating resulting vector writes.

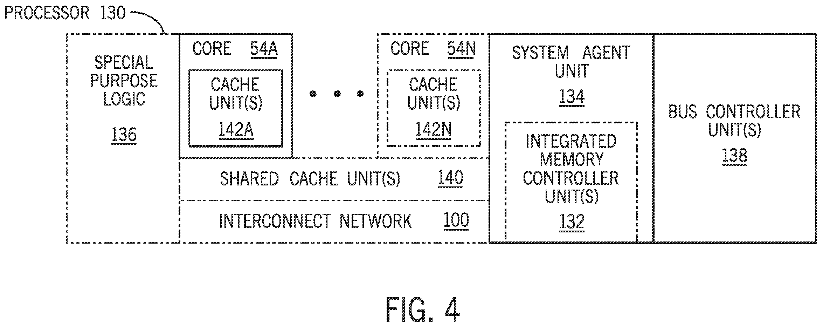

FIG. 4 is a block diagram of a processor 130 that may have more than one processor core 54, may have an integrated memory controller unit(s) 132, and may have integrated graphics according to embodiments of the disclosure. The solid lined boxes in FIG. 4 illustrate a processor 130 with a single core 54A, a system agent unit 134, a set of one or more bus controller unit(s) 138, while the optional addition of the dashed lined boxes illustrates the processor 130 with multiple cores 54A-N, a set of one or more integrated memory controller unit(s) 132 in the system agent unit 134, and a special purpose logic 136.

Thus, different implementations of the processor 130 may include: 1) a CPU with the special purpose logic 136 being integrated graphics and/or scientific (throughput) logic (which may include one or more cores), and the cores 54A-N being one or more general purpose cores (e.g., general purpose in-order cores, general purpose out-of-order cores, or a combination thereof); 2) a coprocessor with the cores 54A-N being a relatively large number of special purpose cores intended primarily for graphics and/or scientific (throughput); and 3) a coprocessor with the cores 54A-N being a relatively large number of general purpose in-order cores. Thus, the processor 130 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), an embedded processor, or the like. The processor 130 may be implemented on one or more chips. The processor 130 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 140, and external memory (not shown) coupled to the set of integrated memory controller unit(s) 132. The set of shared cache units 140 may include one or more mid-level caches, such as level 2 (L2), level 3 (L3), level 4 (L4), or other levels of cache, a last level cache (LLC), and/or combinations thereof. While a ring-based interconnect network 100 may interconnect the integrated graphics logic 136 (integrated graphics logic 136 is an example of and is also referred to herein as special purpose logic 136), the set of shared cache units 140, and/or the system agent unit 134/integrated memory controller unit(s) 132 may use any number of known techniques for interconnecting such units. For example, coherency may be maintained between one or more cache units 142A-N and cores 54A-N.

In some embodiments, one or more of the cores 54A-N are capable of multithreading. The system agent unit 134 includes those components coordinating and operating cores 54A-N. The system agent unit 134 may include, for example, a power control unit (PCU) and a display unit. The PCU may be or may include logic and components used to regulate the power state of the cores 54A-N and the integrated graphics logic 136. The display unit is used to drive one or more externally connected displays.

The cores 54A-N may be homogenous or heterogeneous in terms of architecture instruction set. That is, two or more of the cores 54A-N may be capable of execution of the same instruction set, while others may be capable of executing only a subset of a single instruction set or a different instruction set.

### Computer Architecture

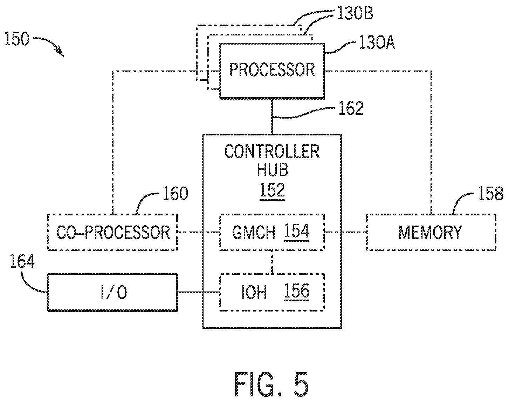

FIGS. 5-8 are block diagrams of embodiments of computer architectures. These architectures may be suitable for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices. In general, a wide variety of systems or electronic devices capable of incorporating the processor 130 and/or other execution logic.

Referring now to FIG. 5, shown is a block diagram of a system 150 in accordance with an embodiment. The system 150 may include one or more processors 130A, 130B that is coupled to a controller hub 152. The controller hub 152 may include a graphics memory controller hub (GMCH) 154 and an Input/Output Hub (IOH) 156 (which may be on separate chips); the GMCH 154 includes memory and graphics controllers to which are coupled memory 158 and a coprocessor 160; the IOH 156 couples input/output (I/O) devices 164 to the GMCH 154. Alternatively, one or both of the memory and graphics controllers are integrated within the processor 130 (as described herein), the memory 158 and the coprocessor 160 are coupled to (e.g., directly to) the processor 130A, and the controller hub 152 in a single chip with the IOH 156.

The optional nature of an additional processor 130B is denoted in FIG. 5 with broken lines. Each processor 130A, 130B may include one or more of the processor cores 54 described herein and may be some version of the processor 130.

The memory 158 may be, for example, dynamic random-access memory (DRAM), phase change memory (PCM), or a combination thereof. For at least one embodiment, the controller hub 152 communicates with the processor(s) 130A, 130B via a multi-drop bus, such as a frontside bus (FSB), point-to-point interface such as QuickPath Interconnect (QPI), or similar connection 162.

In one embodiment, the coprocessor 160 is a special-purpose processor, such as, for example, a high-throughput MIC processor, a network or communication processor, a compression engine, a graphics processor, a GPGPU, an embedded processor, or the like. In an embodiment, the controller hub 152 may include an integrated graphics accelerator.

There can be a variety of differences between the physical resources of the processors 130A, 130B in terms of a spectrum of metrics of merit including architectural, microarchitectural, thermal, power consumption characteristics, and the like.

In some embodiments, the processor 130A executes instructions that control data processing operations of a general type. Embedded within the instructions may be coprocessor instructions. The processor 130A recognizes these coprocessor instructions as being of a type that should be executed by the attached coprocessor 160. Accordingly, the processor 130A issues these coprocessor instructions (or control signals representing coprocessor instructions) on a coprocessor bus or other interconnect, to the coprocessor 160. The coprocessor 160 accepts and executes the received coprocessor instructions.

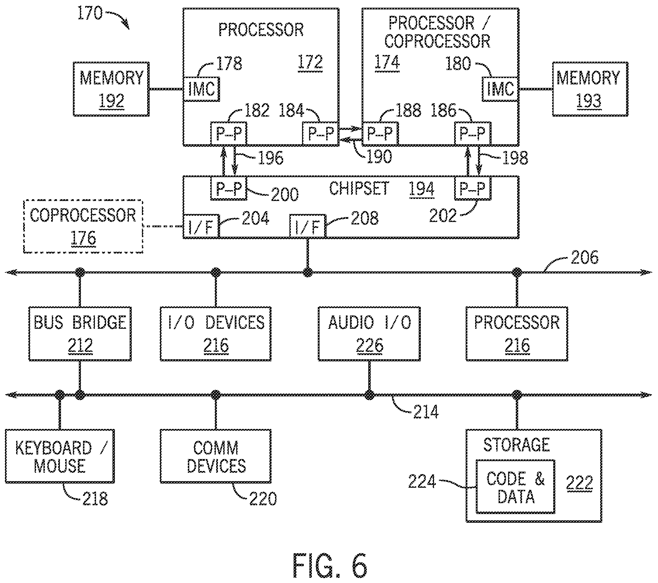

Referring now to FIG. 6, shown is a more detailed block diagram of a multiprocessor system 170 in accordance with an embodiment. As shown in FIG. 6, the multiprocessor system 170 is a point-to-point interconnect system, and includes a processor 172 and a processor 174 coupled via a point-to-point interface 190. Each of processors 172 and 174 may be some version of the processor 130. In one embodiment of the disclosure, processors 172 and 174 are respectively processors 130A and 130B, while coprocessor 176 is coprocessor 160. In another embodiment, processors 172 and 174 are respectively processor 130A and coprocessor 160.

Processors 172 and 174 are shown including integrated memory controller (IMC) units 178 and 180, respectively. The processor 172 also includes point-to-point (P-P) interfaces 182 and 184 as part of its bus controller units. Similarly, the processor 174 includes P-P interfaces 186 and 188. The processors 172, 174 may exchange information via a point-to-point interface 190 using P-P interfaces 184, 188. As shown in FIG. 6, IMCs 178 and 180 couple the processors to respective memories, namely a memory 192 and a memory 193 that may be different portions of main memory locally attached to the respective processors 172, 174.

Processors 172, 174 may each exchange information with a chipset 194 via individual P-P interfaces 196, 198 using point-to-point interfaces 182, 200, 186, 202. Chipset 194 may optionally exchange information with the coprocessor 176 via a high-performance interface 204. In an embodiment, the coprocessor 176 is a special-purpose processor, such as, for example, a high-throughput MIC processor, a network or communication processor, a compression engine, a graphics processor, a GPGPU, an embedded processor, or the like.

A shared cache (not shown) may be included in either processor 172 or 174 or outside of both processors 172 or 174 that is connected with the processors 172, 174 via respective P-P interconnects such that either or both processors' local cache information may be stored in the shared cache if a respective processor is placed into a low power mode.

The chipset 194 may be coupled to a first bus 206 via an interface 208. In an embodiment, the first bus 206 may be a Peripheral Component Interconnect (PCI) bus or a bus such as a PCI Express bus or another third generation I/O interconnect bus, although the scope of the present disclosure is not so limited.

As shown in FIG. 6, various I/O devices 210 may be coupled to first bus 206, along with a bus bridge 212 that couples the first bus 206 to a second bus 214. In an embodiment, one or more additional processor(s) 216, such as coprocessors, high-throughput MIC processors, GPGPUs, accelerators (such as, e.g., graphics accelerators or digital signal processing (DSP) units), field programmable gate arrays, or any other processors, are coupled to the first bus 206. In an embodiment, the second bus 214 may be a low pin count (LPC) bus. Various devices may be coupled to the second bus 214 including, for example, a keyboard and/or mouse 218, communication devices 220 and a storage unit 222 such as a disk drive or other mass storage device which may include instructions/code and data 224, in an embodiment. Further, an audio I/O 226 may be coupled to the second bus 214. Note that other architectures may be deployed for the multiprocessor system 170. For example, instead of the point-to-point architecture of FIG. 6, the multiprocessor system 170 may implement a multi-drop bus or other such architectures.

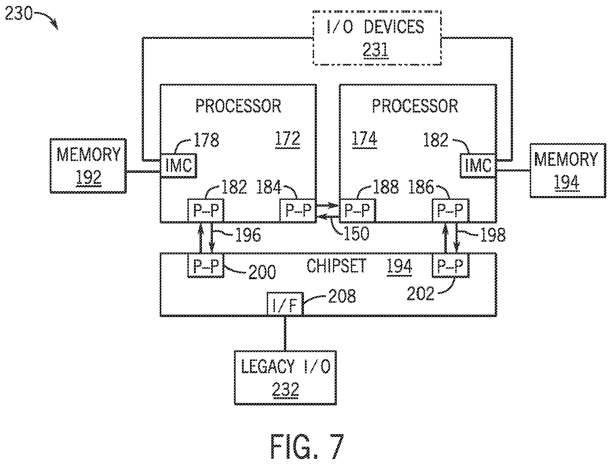

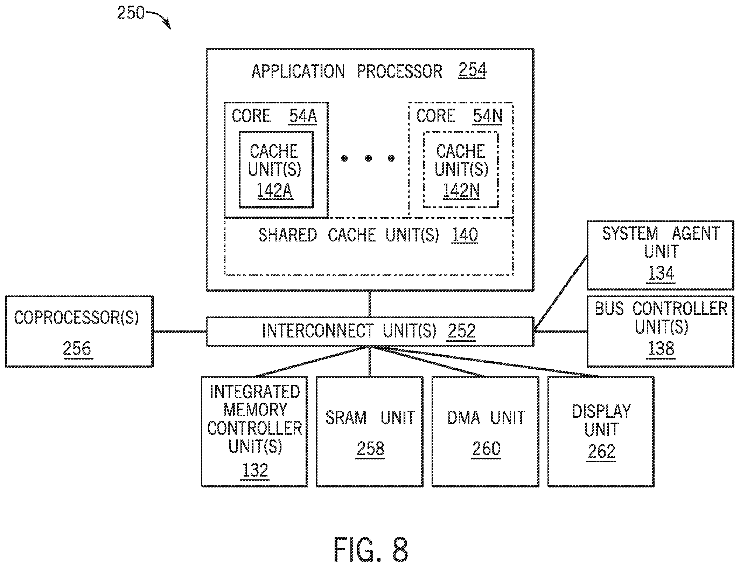

Referring now to FIG. 7, shown is a block diagram of a system 230 in accordance with an embodiment. Like elements in FIGS. 7 and 8 contain like reference numerals, and certain aspects of FIG. 6 have been omitted from FIG. 7 to avoid obscuring other aspects of FIG. 7.

FIG. 7 illustrates that the processors 172, 174 may include integrated memory and I/O control logic ("IMC") 178 and 180, respectively. Thus, the IMC 178, 180 include integrated memory controller units and include I/O control logic. FIG. 7 illustrates that not only are the memories 192, 193 coupled to the IMC 178, 180, but also that I/O devices 231 are also coupled to the IMC 178, 180. Legacy I/O devices 232 are coupled to the chipset 194 via interface 208.

Referring now to FIG. 8, shown is a block diagram of a SoC 250 in accordance with an embodiment. Similar elements in FIG. 4 have like reference numerals. Also, dashed lined boxes are optional features included in some SoCs 250. In FIG. 8, an interconnect unit(s) 252 is coupled to: an application processor 254 that includes a set of one or more cores 54A-N that includes cache units 142A-N, and shared cache unit(s) 140; a system agent unit 134; a bus controller unit(s) 138; an integrated memory controller unit(s) 132; a set or one or more coprocessors 256 that may include integrated graphics logic, an image processor, an audio processor, and/or a video processor; a static random access memory (SRAM) unit 258; a direct memory access (DMA) unit 260; and a display unit 262 to couple to one or more external displays. In an embodiment, the coprocessor(s) 256 include a special-purpose processor, such as, for example, a network or communication processor, a compression engine, a GPGPU, a high-throughput MIC processor, an embedded processor, or the like.

Embodiments of the mechanisms disclosed herein may be implemented in hardware, software, firmware, or a combination of such implementation approaches. Embodiments of the disclosure may be implemented as computer programs and/or program code executing on programmable systems including at least one processor, a storage system (including volatile and non-volatile memory and/or storage elements), at least one input device, and at least one output device.

Program code, such as data 224 illustrated in FIG. 6, may be applied to input instructions to perform the functions described herein and generate output information. The output information may be applied to one or more output devices. For purposes of this application, a processing system includes any system that has a processor, such as, for example, a digital signal processor (DSP), a microcontroller, an application-specific integrated circuit (ASIC), or a microprocessor.

The program code may be implemented in a high-level procedural or object-oriented programming language to communicate with a processing system. The program code may also be implemented in an assembly language or in a machine language. In fact, the mechanisms described herein are not limited in scope to any particular programming language. In any case, the language may be a compiled language or an interpreted language.

One or more aspects of at least one embodiment may be implemented by representative instructions stored on a machine-readable medium that represents various logic within the processor that, when read by a machine causes the machine to fabricate logic to perform the techniques described herein. Such representations, known as "IP cores," may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic cards, optical cards, or any other type of media suitable for storing electronic instructions.

Accordingly, embodiments of the embodiment include non-transitory, tangible machine-readable media containing instructions or containing design data, such as designs in Hardware Description Language (HDL) that may define structures, circuits, apparatuses, processors and/or system features described herein. Such embodiments may also be referred to as program products.

### Emulation

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert instructions to one or more other instructions to be processed by the core. The instruction converter may be implemented in software, hardware, firmware, or a combination thereof. The instruction converter may be implemented on processor, off processor, or part on and part off processor.

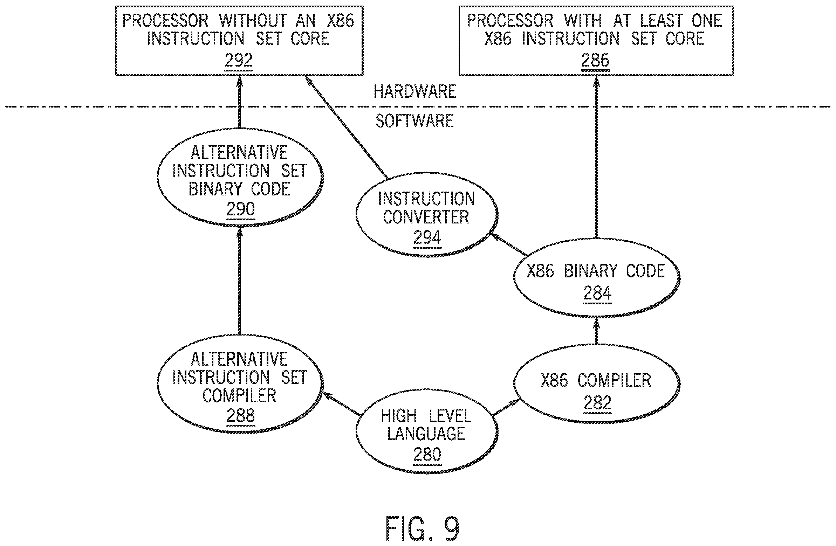

FIG. 9 is a block diagram contrasting the use of a software instruction converter to convert binary instructions in a source instruction set to binary instructions in a target instruction set according to embodiments of the disclosure. In the illustrated embodiment, the instruction converter is a software instruction converter, although alternatively the instruction converter may be implemented in software, firmware, hardware, or any combinations thereof. FIG. 9 shows a program in a high-level language 280 may be compiled using an x86 compiler 282 to generate x86 binary code 284 that may be natively executed by a processor with at least one x86 instruction set core 286. The processor with at least one x86 instruction set core 286 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 282 represents a compiler that is operable to generate x86 binary code 284 (e.g., object code) that can, with or without additional linkage processing, be executed on the processor with at least one x86 instruction set core 286.

Similarly, FIG. 9 shows the program in the high-level language 280 may be compiled using an alternative instruction set compiler 288 to generate alternative instruction set binary code 290 that may be natively executed by a processor without at least one x86 instruction set core 292 (e.g., a processor with processor cores 54 that execute the MIPS instruction set of MIPS Technologies of Sunnyvale, CA and/or that execute the ARM instruction set of ARM Holdings of Sunnyvale, CA). An instruction converter 294 is used to convert the x86 binary code 284 into code that may be natively executed by the processor without an x86 instruction set core 292. This converted code is not likely to be the same as the alternative instruction set binary code 290 because an instruction converter capable of this is difficult to make; however, the converted code may accomplish the general operation and be made up of instructions from the alternative instruction set. Thus, the instruction converter 294 represents software, firmware, hardware, or a combination thereof that, through emulation, simulation or any other process, allows a processor or other electronic device that does not have an x86 instruction set processor or core to execute the x86 binary code 284.

### On-Demand Paging in a Virtualized Datacenter

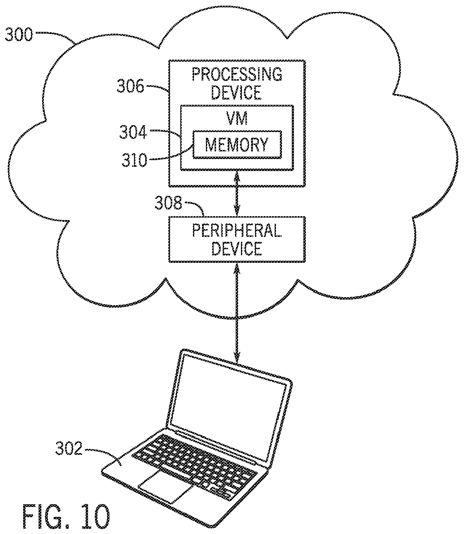

Software running on a processing device such as discussed above with reference to FIGS. 1-9 may be used to create a virtualized datacenter, which may provide web hosting, streaming services, remote computing, and more. As mentioned above, virtualization allows the creation of multiple simulated environments, operating systems (OS), or dedicated resources from a single, physical hardware system. FIG. 10 illustrates one example use case of a virtualized datacenter 300, in which a client device 302 may interact with a virtual machine (VM) 304 that is running on a processing device 306. The virtualized data center 300 may provide on-demand computing for any suitable number of client devices 302. Additional virtual machines (VMs) 304 may be brought online or dismissed in response to changing demands for computing resources. While the virtual machine (VM) 304 shown in the virtualized datacenter 300 of FIG. 10 is illustrated interfacing with a client device 302, virtual machines (VMs) 304 may interface with other types of clients, including other virtual machines (VMs) 304 or applications.

The virtual machine (VM) 304 may interact with any suitable number and types of peripheral devices 308. In the particular example shown in FIG. 10, the peripheral device 308 is a smart network interface card (NIC) that allows the client device 302 to communicate with the virtual machine (VM) 304. Other example peripheral devices 308 may include any suitable Peripheral Component Interconnect express (PCIe) devices, including a network interface card (NIC), a storage device such as non-volatile memory (e.g., an NVM Express device), a cryptographic engine (e.g., Look-Aside Crypto), a compression engine, or a remote direct memory access (RDMA) device, among others.

The peripheral device 308 may access memory 310 of the virtual machine (VM) 304 using a form of Direct Memory Access (DMA) through Address Translation Service (ATS). Because the virtualized datacenter 300 uses on-demand paging, which will be discussed in greater detail below, even if an attempt to access the memory 310 of the virtual machine (VM) 304 results in an I/O page fault, it may be detected and recovered from gracefully.

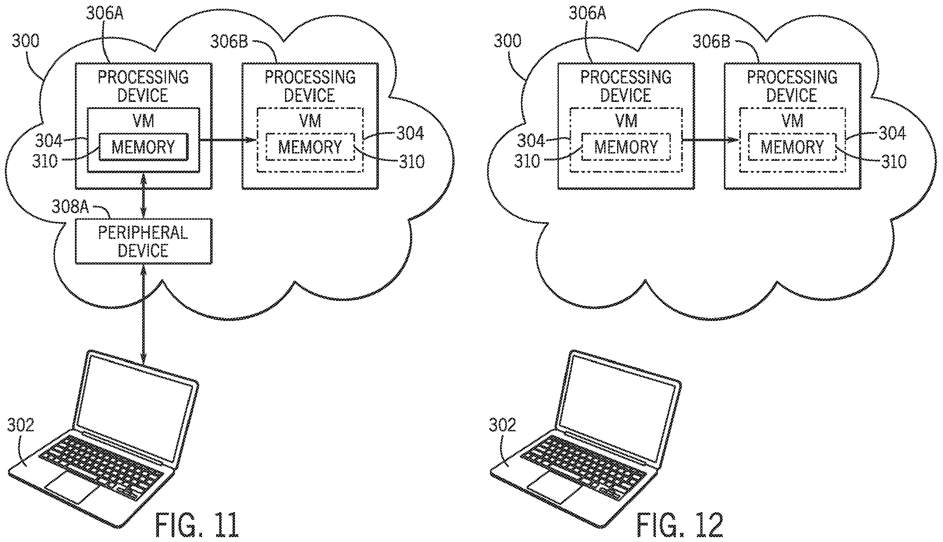

Because the on-demand paging of this disclosure reduces the negative impacts of I/O page faults, the virtualized datacenter 300 may undertake several strategies that may substantially increase efficiency even though doing so may increase a likelihood of page faults. For example, as shown in FIGS. 11-14, the virtualized datacenter 300 may perform live migration of virtual machines (VMs) 304. The term "live migration" refers to moving a running virtual machine (VM) 304 between different processing devices 306 without disconnecting the client device 302 or application from communication with the virtual machine (VM) 304 for long enough to be noticeable.

In FIG. 11, a virtual machine (VM) 304 has been selected to move from a processing device 306A to a processing device 306B in the virtualized datacenter 300. There are many reasons to potentially move a virtual machine (VM) 304, such as to consolidate the virtual machines (VMs) 304 to reduce the number of processing devices 306 that are currently running, to perform maintenance on a processing device or its peripheral devices, to group the virtual machine (VM) 304 with other complementary virtual machines (VMs) 304, to provide access to different physical resources, and so forth. FIG. 11 illustrates a start of live migration. Here, memory 310 and the state of the virtual machine (VM) 304 (e.g., CPU state, registers, network connectivity details) may begin to be copied from the processing device 306A to the processing device 306B. At this point, the virtual machine (VM) 304 remains running on the processing device 306A.

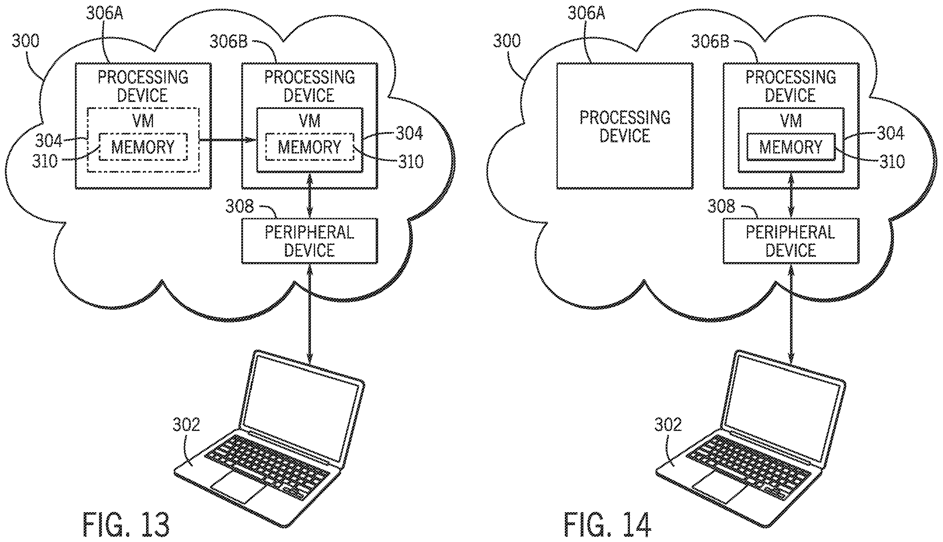

As shown in FIG. 12, a final state of the virtual machine (VM) 304 may be copied from the processing device 306A to the processing device 306B and the virtual machine (VM) 304 may briefly enter a "blackout period." At this point, the virtual machine (VM) 304 is briefly disconnected from the client device 302. As shown in FIG. 13, the blackout period may be substantially reduced by reactivating the virtual machine (VM) 304 on the processing device 306B before all the memory 310 has been transferred from the processing device 306A to the processing device 306B. This allows the client device 302 or other application with which the virtual machine (VM) 304 is interacting to avoid lengthy downtime. However, because the memory 310 is still being copied over, it is possible for a peripheral device 308 to attempt to access memory that is not yet on the processing device 306B, resulting in an I/O page fault.

Once all the memory 310 has been transferred over to the processing device 306B, as shown in FIG. 14, the virtual machine (VM) 304 may be understood to be fully migrated. The processing device 306A may no longer be running the virtual machine (VM) 304. In some cases, to save power, the processing device 306A may be powered down or otherwise taken offline.

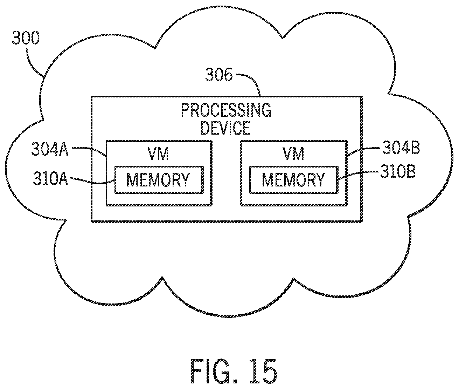

Another strategy that may increase efficiency at the cost of more page faults is to overcommit the memory 310. As utilization varies and more or fewer virtual machines (VMs) 304 are active on a processing device 306, it may be useful to dynamically overcommit memory across the virtual machines (VMs) 304. In a simplified example shown in FIG. 15, there may be multiple virtual machines (VMs) 304A and 304B residing on a processing device 306. The virtual machine (VM) 304A may have memory 310A and the virtual machine (VM) 304B may have memory 310B. From the perspective of the respective virtual machines (VMs) 304A and 304B, the memory 310A and 310B appears to correspond directly to an equivalent amount of physical memory located in a physical memory device. However, in this example at least some of the memory 310A and 310B may correspond to the same physical memory. This may enable more virtual machines (VMs) 304 to operate on a single processing device 306, but at the cost of potential page faults if one virtual machine (VM) 304 (e.g., the virtual machine (VM) 304A) attempts to access a page of memory (e.g., memory 310A) that corresponds to physical memory currently in use by another virtual machine (VM) 304 (e.g., the virtual machine (VM) 304B). With dynamic random-access memory (DRAM) costs becoming more and more of the overall total cost of operation, providing this flexibility to overcommit VM memory space enables a path to better overall utilization of a system's total DRAM capacity and an increased VM density on a given processing device 306.

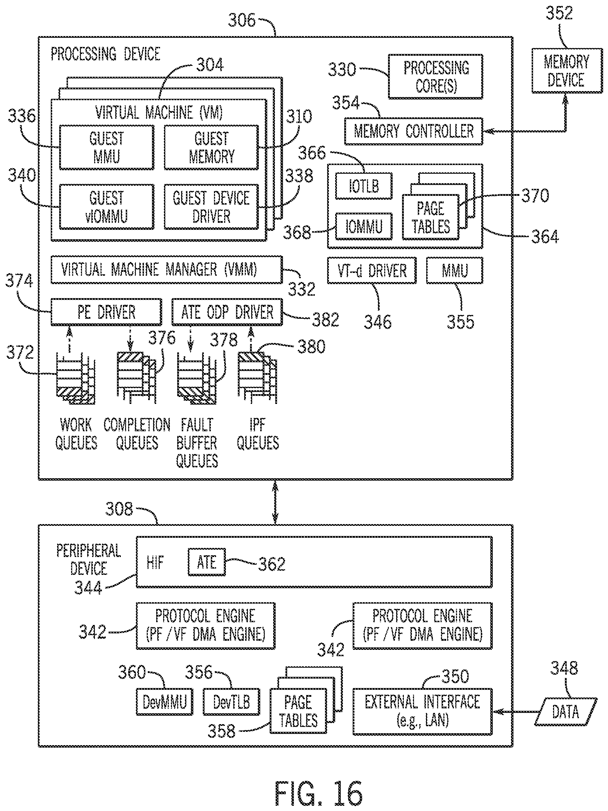

FIG. 16 illustrates a block diagram of a processing device 306 in communication with a peripheral device 308 showing the various components that provide on-demand device-assisted paging with any suitable number of virtual machines (VMs) 304 running on the processing device 306. The processing device 306 may represent any suitable processor or CPU. As used in this disclosure, the terms "processor" and "CPU" refer to a device that can execute instructions encoding arithmetic, logical, or I/O operations to carry out the systems and methods of this disclosure. For example, the processing device 306 may include an arithmetic logic unit (ALU), a control unit, and registers, and may operate in the manner discussed above with reference to FIGS. 1-9. The processing device 306 includes processing core(s) 330 that may run software such as an operating system (OS) upon which other software components may run. These other software components will be discussed further below. They include the virtual machine (VM) 304, a virtual machine manager (VMM) 332, as well as a variety of drivers to enable the virtual machine (VM) 304 to interact with devices and applications such as the peripheral device 308 and to gracefully recover from I/O page faults.

The processing device 306 may be a single-core processor having one processing core 330 that processes a single instruction pipeline or a multi-core processor having multiple processing cores 330 that may simultaneously process multiple instruction pipelines. The processing device 306 may include various commercially available processors, including without limitation Intel^{®} Atom^{®}, Celeron^{®}, Core (2) Duo^{®}, Core i3, Core i5, Core i7, Itanium^{®}, Pentium^{®}, Xeon^{®} or Xeon Phi^{®} processors, ARM processors, and similar processors. In some cases, the processing device 306 may be implemented as a single integrated circuit, two or more integrated circuits, or may be a component of a multi-chip module (e.g., in which individual microprocessor dies are included in a single integrated circuit package and hence share a single socket). The processing device 306 may be part of a computing system such as a datacenter server, a desktop computer, a tablet computer, a laptop computer, a netbook, a notebook computer, a personal digital assistant (PDA), a workstation, a cellular telephone, a mobile computing device, an Internet appliance or any other type of computing device. In some cases, the processing device 306 may be used in a system-on-a-chip (SoC) system or system-in-package (SiP) system.

In one example, the processing device 306 is a disaggregated server. A disaggregated server is a server that breaks up components and resources into subsystems and connects them through network connections (e.g., network sleds). Disaggregated servers can be adapted to changing storage or compute loads as needed without replacing or disrupting an entire server for an extended period of time. A server could, for example, be broken into modular compute, I/O, power, and storage modules that can be shared among other nearby servers. The processing device 306 may include any other suitable components to support the operation of the virtual machine (VM) 304, such as a communication bus between components of the processing device 306, a graphics controller, local cache memory (e.g., L4, L3, L2, L1 cache), and other supporting circuitry and software.

Virtualization is implemented using software, such as the virtual machine manager (VMM) 332, which may monitor and manage the virtual machine (VM) 304. The virtual machine manager (VMM) 332 may represent a hypervisor such as such as Kernel-based virtual machine (KVM), Xen, VMware ESXI, or the like. The virtual machine manager (VMM) 332 may abstract a physical layer of the processing device 306, presenting this abstraction to the virtual machines (VMs) 304 (sometimes referred to as the "guests"). The virtual machine manager (VMM) 332 may provide a virtual operating platform for the virtual machines (VMs) 304. In some implementations, more than one virtual machine manager (VMM) 332 may support different virtual machines (VMs) 304. Each virtual machine (VM) 304 may be a software implementation of a machine that executes programs as though it were an actual physical machine. For example, the virtual machine (VM) 304 illustrated in FIG. 16 may include a guest memory management unit (MMU) 336 that may manage guest memory 310. A guest device driver 338 may allow the virtual machine (VM) 304 to interface with the peripheral device 308. A virtual input/output memory management unit (vIOMMU) 340 may act as a virtual model of a guest input/output memory management unit (IOMMU).

The peripheral device 308 may interact with each virtual machine (VM) 304 as if it were a physical machine using a protocol engine (PE) 342. The protocol engine (PE) 342 may operate as a direct memory access (DMA) engine for a virtual function (VF) or physical function (PF) of the peripheral device 308. There may be multiple protocol engines 342 to enable interaction with multiple virtual machines (VMs) 304. The protocol engines 342 may interface with the guest device drivers 338 through a host interface (HIF) 344. The protocol engines 342 may directly access hardware components of the processing device 306, such as to read from or write to the physical memory corresponding to the guest memory 310 of the virtual machine (VM) 304, using a virtualization management protocol on the processing device 306 such as a virtualization technology-direct (VT-d) driver 346 that allows authorized technology direct I/O access.

To provide one particular example, the peripheral device 308 may receive incoming data 348 into an external interface 350 that may be destined for the virtual machine (VM) 304. In some cases, the peripheral device 308 may be a network interface card (NIC) that receives networking data into a local area network (LAN) interface. The protocol engine (PE) 342 corresponding to the virtual machine (VM) 304 that the data 348 is intended for may transfer the data 348 into the guest memory 310 of that virtual machine (VM) 304 using direct memory access (DMA).

Before continuing, it should be understood that, while data is stored at a physical memory address representing an actual location in physical memory (e.g., an actual physical location on a memory device 352 that may be accessed through a memory controller 354, managed by a memory management unit (MMU) 355), software running on the processing device 306 and the peripheral device 308 may operate using a virtual memory address that is translated to the physical memory address when the memory is accessed. A structure known as a translation lookaside buffer (TLB) stores recently used mappings of virtual memory addresses to their corresponding physical memory addresses. There may be multiple TLBs used by the processing device 306 and peripheral device 308 for memory for specific domains. The peripheral device 308 may maintain a local cache of recently accessed mappings between virtual memory addresses and physical memory addresses for I/O access in the form of a device translation lookaside buffer (devTLB) 356 and associated page tables 358. The device translation lookaside buffer (devTLB) 356 and associated page tables 358 may be used and maintained by a device memory management unit (devMMU) 360.

To transfer the data 348 to the guest memory 310 of the virtual machine (VM) 304, the device translation lookaside buffer (devTLB) 356 may rapidly translate the virtual memory address to its corresponding physical memory address. The protocol engine (PE) 342 may use DMA to store the data 348 in the physical memory of the processing device 306 corresponding to the guest memory 310 of the virtual machine (VM) 304.

If the device translation lookaside buffer (devTLB) 356 does not currently have an entry corresponding to the request, however, this may be referred to as a "cache miss" or "TLB miss." A TLB miss handling process is used to obtain the corresponding entry by conducting a search known as a "page walk" through the page tables 358. If the page walk does not identify the physical memory address that corresponds to the requested virtual memory address, the peripheral device 308 may request the translation from the processing device 306. For example, an address translation engine (ATE) 362 may send an Address Translation Service (ATS) message requesting the translation.

In the processing device 306, I/O memory management blocks 364 may respond to the ATS request from the peripheral device 308. The I/O memory management blocks 364 may include an input/output translation lookaside buffer (IOTLB) 366 that can be used by an input/output memory management unit (IOMMU) 368 to provide the physical memory address that corresponds to a desired virtual memory address indicated by the ATS request. If the requested translation is in the input/output translation lookaside buffer (IOTLB) 366, the physical memory address may be provided in response and the protocol engine (PE) 342 may use DMA to store the data 348 in the proper physical address on the processing device 306, making it accessible to the virtual machine (VM) 304 by way of its guest memory 310. If the input/output translation lookaside buffer (IOTLB) 366 does not currently have an entry corresponding to the request, however, a TLB miss handling process is used to obtain the corresponding entry by conducting a page walk through page tables 370. If the page walk is successful, an ATS response may provide the translation to the peripheral device 308, which may store the translation as an entry in the device translation lookaside buffer (devTLB) 356.

When the protocol engine (PE) 342 is able to obtain the translation from virtual memory to physical memory (from the device translation lookaside buffer (devTLB) 356 or the I/O memory management blocks 364), the protocol engine (PE) 342 may use DMA to write the data 348 to the proper physical address. The protocol engine (PE) 342 may populate entries to a work queue 372 for a protocol engine (PE) driver 374, which may populate a completion queue 376 to indicate that the memory transfer is complete. Different protocol engines 342 may have different respective sets of work queue 372, protocol engine (PE) driver 374, and completion queue 376.

If a translation is unavailable even after a page walk (e.g., the page walk does not identify the physical memory address that corresponds to the requested virtual memory address), the result is a page fault. A corresponding ATS response may be returned that indicates that a page fault has occurred. In the case of a page fault, the location in memory to which the data 348 is intended does not currently exist. The peripheral device 308 could discard the data 348 while awaiting the resolution of the page fault on the processing device 306, but this may introduce substantial latency since the data 348 may need to be retransmitted into the peripheral device 308 after the page fault is resolved. The peripheral device 308 could alternatively store the data 348 temporarily in a local buffer on the peripheral device 308 while awaiting the resolution of the page fault on the processing device 306, but this could increase the cost of the peripheral device 308 because this would entail adding large enough buffers to store the data 348. Indeed, in some cases, the peripheral device 308 may not have enough memory to store the data 348.

These challenges may be reduced or eliminated by performing on-demand device-assisted paging. When an indication of a page fault is received at the peripheral device 308, the protocol engine (PE) 342 transfers the data by DMA to pre-allocated fault buffers of a fault buffer queue 378 on the processing device 306. The protocol engine (PE) 342 by way of the address translation engine (ATE) 362 also writes an entry into an I/O page fault (IPF) queue 380 that indicates a descriptor for a DMA operation that has encountered a page fault. The fault buffer queue 378 provides a set of descriptors and data buffers for temporarily storing data from faulting DMA writes until a page fault has been resolved. A pointer to these buffers is provided to steer the faulting payloads for temporarily storing payloads while the page fault is being resolved. The I/O page fault (IPF) queue 380 is a queue with entries that contain a descriptor for a DMA operation that has encountered a page fault. The descriptor contains information for an address translation engine on-demand paging (ATE ODP) driver 382 to successfully resolve the page fault. Logically, this is similar to PCIe Address Translation Service - Page Request Interface (ATS-PRI) as a mechanism to request the host for page fault resolution.

The fault buffer queue 378 and the I/O page fault (IPF) queue 380 may be memory that is "pinned" and therefore not subject to a page fault. They may reside in host memory that is pinned in the host operating system and, as such, able to store data that is sent by multiple different protocol engines 342 and/or for multiple different virtual machines (VMs) 304. In some embodiments, these may, additionally or alternatively, be pinned in guest memory 310 of each virtual machine (VM) 304 or for a subset of the virtual machines (VMs) 304, and thus may be accessible to one protocol engine (PE) 342 and/or for that virtual machine (VM) 304. Transferring the data 348 to buffers corresponding to the fault buffer queue 378 does not immediately place the data 348 into the guest memory 310, but does allow the data 348 to avoid being discarded or being stored for an extended time on the peripheral device 308.

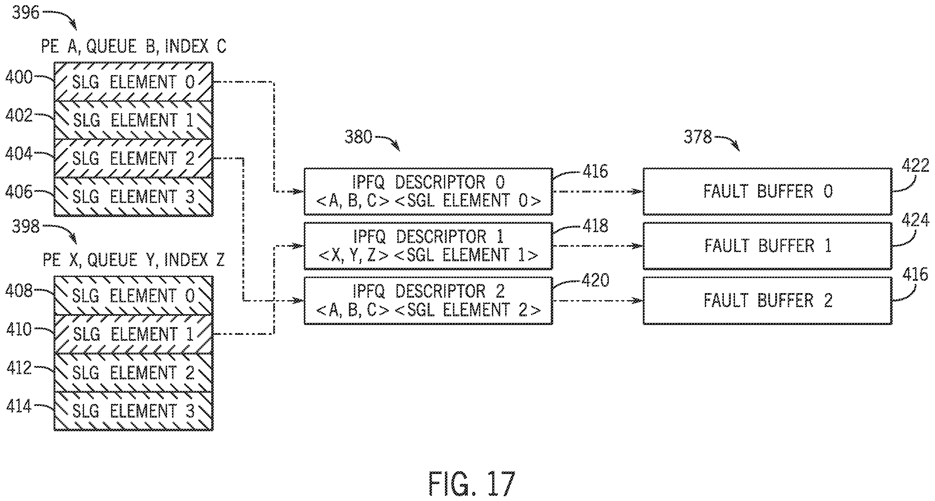

The fault buffer queue 378, I/O page fault (IPF) queue 380, and address translation engine on-demand paging (ATE ODP) driver 382 may support multiple protocol engines 342 associated with multiple virtual machines (VMs) 304. FIG. 17 shows an example where there are two work queue entries 396 and 398 (e.g., descriptors) associated to different protocol engines (PEs) 342 represented as PE A and PE X, respectively. The work queue entries 396 and 398 may be used for a DMA write I/O operation (e.g., LAN receive). In the example of FIG. 17, the work queue entry 396 includes a scatter gather list (SGL) with four scatter gather elements (SGEs) 400, 402, 404, and 406 and the work queue entry 398 includes a scatter gather list (SGL) with four scatter gather elements (SGEs) 408, 410, 412, and 414. In the example shown, the scatter gather element (SGE) 400 and scatter gather element (SGE) 404 in the work queue entry 396 of PE A encounter a write fault and the scatter gather element (SGE) 410 in the work queue entry 398 of PE X encounters a write fault. These faults can occur in arbitrary order and therefore may be posted to the I/O page fault (IPF) queue 380 in an interleaved fashion as I/O page fault (IPF) queue 380 entries 416, 418, and 420. Note that there may be a 1:1 correlation between each I/O page fault (IPF) queue 380 entry 416, 418, and 420 (e.g., each page fault) and an associated fault buffer queue 378 entry 422, 424, and 426 pointing to the data buffers where data corresponding to the page fault have been temporarily stored.

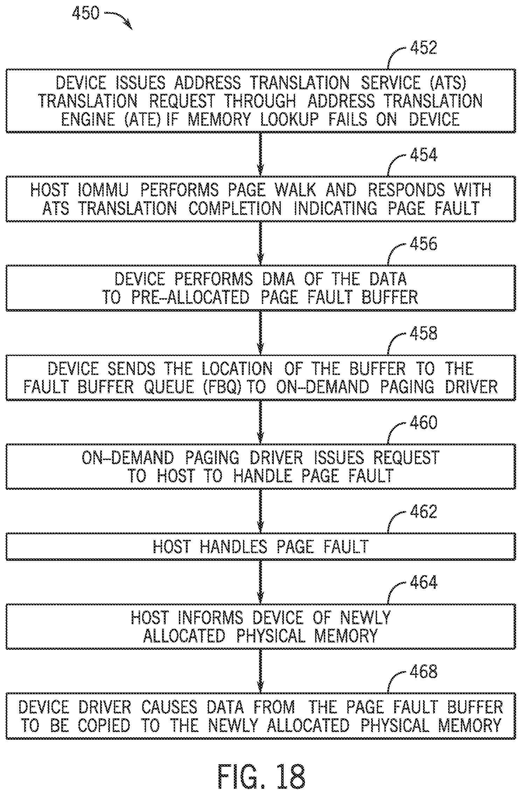

FIG. 18 is a flowchart 450 describing a process for device-assisted on-demand paging. The flowchart 450 starts as the peripheral device 308 attempts to store data in memory of the processing device 306, but memory lookup has failed. Thus, the protocol engine (PE) 342 of peripheral device 308 that experienced memory lookup failure may issue an Address Translation Service (ATS) translation request through the address translation engine (ATE) 362 (process block 452). In response, the host input/output memory management unit (IOMMU) 368 may look for the translation in the input/output translation lookaside buffer (IOTLB) 366 and, finding it missing, perform a page walk. If the page walk shows that the page is not in the I/O memory, the host input/output memory management unit (IOMMU) 368 may respond with an ATS completion message indicating a page fault (e.g., success with R=W=0) (process block 454). Based on the ATS translation response indicating a page fault, the protocol engine (PE) 342 performs a direct memory access (DMA) operation to store the data into a pre-allocated fault buffer (block 456). The protocol engine (PE) 342 also issues (e.g., by way of the address translation engine (ATE) 362) an indication of an I/O page fault (IPF) with a descriptor indicating the location of the buffer into which the data is stored to the address translation engine on-demand paging (ATE ODP) driver 382 (process block 458). The address translation engine on-demand paging (ATE ODP) driver 382 may receive an event to handle a read or write fault with the associated buffer and may issue a request to the host MMU and/or VT-D driver 346 to handle the page fault (process block 460). For example, the address translation engine on-demand paging (ATE ODP) driver 382 may issue a Page Request Service (PRS) request using a non-blocking call to handle_mm_fault(). The address translation engine on-demand paging (ATE ODP) driver 382 may pass (Physical RID (Bus, Device, Function), PASID, Page-Group Index, Permissions for access) via the host MMU and/or VT-D driver 346, or via an IOMMU kernel application programming interface (API). Here, it may be noted that the VT-D driver 346 may expect the same format as the PRS message, as defined in the PCIe Specification Chapter 10.4.

Upon receipt of the request to handle the page fault, the host may handle the page fault (process block 462). This may be done in a variety of ways. In some embodiments, the input/output memory management unit (IOMMU) 368 may be used to resolve the page fault. For example, the IOMMU driver may walk page-tables and determine if the protocol engine (PE) 342 is owned by a guest (e.g., a virtual machine (VM) 304) or the host (e.g., a host operating system running on the processing device 306), and whether this is a first level fault. If the page fault is a guest fault, the IOMMU may inject a fake PRS message into a virtual page request queue (vPRQ) of the virtual input/output memory management unit (vIOMMU) 340 of the virtual machine (VM) 304, collect the results after the virtual machine (VM) 304 returns a page response, and send the result to the address translation engine on-demand paging (ATE ODP) driver 382. If the fault is a shared virtual memory (SVM) fault, the host operating system running on the processing device 306 may perform a native page fault resolution and return the results back to the address translation engine on-demand paging (ATE ODP) driver 382. In another example, the host may handle the page fault using the host MMU and/or VT-D driver 346. For instance, the host MMU and/or VT-D driver 346 may determine whether this is a first or second level fault and where to steer the page fault. First level faults may be handled using the virtual input/output memory management unit (vIOMMU) 340 of the virtual machine (VM) 304 (e.g., via the VT-D driver 346), while second level faults may be handled directly via the VT-D driver 346.

In either case, the fault handler resolves the fault and returns a successful fault-handling event to the address translation engine on-demand paging (ATE ODP) driver 382 (process block 464). The response may be analogous to a Page Request Service (PRS) response that would be made to the peripheral device 308. The response may contain an indication of success along with PRS fields according to the PRS specification, though there may be no host physical address (HPA) returned. Indeed, the address translation engine on-demand paging (ODP ATE) driver 382 may have only the guest physical address (GPA) since the page fault has been handled.

Using the guest physical address (GPA), the address translation engine on-demand paging (ATE ODP) driver 382 causes the faulted payload stored in the fault buffer to be directly written to the memory 310 (process block 466). For example, the address translation engine on-demand paging (ATE ODP) driver 382 may make a call to the virtual machine manager (VMM) 332 such as, or similar to, kvm_write_guest(). This may directly write the faulted payload and/or completions to the buffer and completion queue 376 as allocated by the protocol engine (PE) driver 374 corresponding to that virtual machine (VM) 304. The virtual machine manager (VMM) 332 may respond to the address translation engine on-demand paging (ATE ODP) driver 382 with an indication of success. Thereafter, the address translation engine on-demand paging (ATE ODP) driver 382 may respond to the address translation engine (ATE) 362 to indicate resolution with respect to the I/O page fault (IPF) handling. In some cases, the address translation engine on-demand paging (ATE ODP) driver 382 may also issue interrupts on behalf of the protocol engine (PE) 342 to the virtual machine (VM) 304 to process completions once the data has been stored in the newly allocated physical memory.

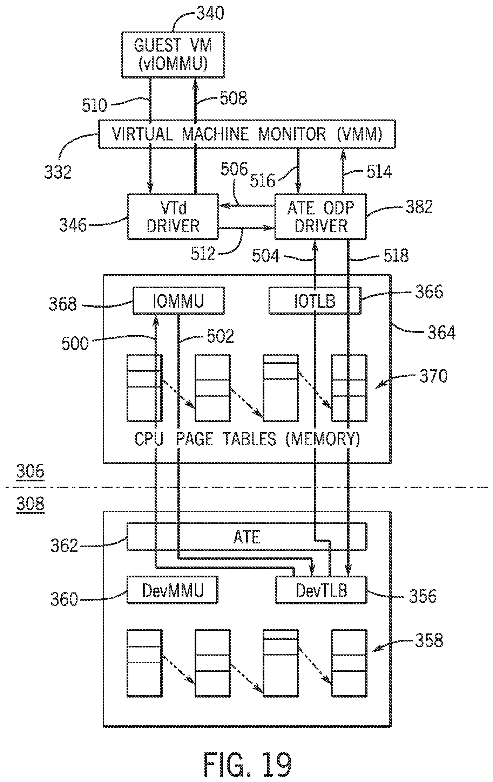

This process is shown visually by way of communication between components in a flow diagram in FIG. 19. When the device memory management unit (devMMU) 360 identifies a TLB miss in the device translation lookaside buffer (devTLB) 356 as well as the associated local device page tables 358, the address translation engine (ATE) 362 may issue an ATS translation request message 500 to the input/output memory management unit (IOMMU) 368. In response, the input/output memory management unit (IOMMU) 368 may check the input/output translation lookaside buffer (IOTLB) 366 and walk the page tables 370. Finding no translation, the input/output memory management unit (IOMMU) 368 may respond with an ATS completion message 502 indicating a page fault (e.g., success with R=W=0). After a direct memory access (DMA) operation stores the data into a pre-allocated fault buffer (not shown), an I/O page fault (IPF) indication 504 may be sent from the address translation engine (ATE) 362 on the peripheral device 308 to the address translation engine on-demand paging (ATE ODP) driver 382 on the processing device 306.

The address translation engine on-demand paging (ATE ODP) driver 382 may issue a page fault handle request 506 to the VT-D driver 346. For example, the address translation engine on-demand paging (ATE ODP) driver 382 may issue a Page Request Service (PRS) request using a non-blocking call to handle_mm_fault(). If the page fault is a second-level fault, the VT-D driver 346 may handle it directly. If the page fault is a first-level fault, the VT-D driver 346 may issue a page fault request message 508 to the virtual input/output memory management unit (vIOMMU) 340 by way of the virtual machine manager (VMM) 332. The virtual input/output memory management unit (vIOMMU) 340 may resolve the page fault and provide a response 510 with the resulting guest physical address (GPA). The VT-D driver 346 may issue a response 512 returning a successful fault-handling event to the address translation engine on-demand paging (ATE ODP) driver 382. The response 512 may contain an indication of success along with PRS fields specified by the PRS specification and indicating the guest physical address (GPA).

Using the guest physical address (GPA), the address translation engine on-demand paging (ATE ODP) driver 382 issues a message 514 to the virtual machine manager (VMM) 332 to cause the faulted payload stored in the fault buffer to be directly written to memory. The message 514 may be a call that is, or is similar to, kvm_write_guest(). Once the operation is complete, the virtual machine manager (VMM) 332 may issue a response 516 to the address translation engine on-demand paging (ATE ODP) driver 382 with an indication of success. Thereafter, the address translation engine on-demand paging (ATE ODP) driver 382 may issue a page fault response 518 to the address translation engine (ATE) 362 to indicate that the I/O page fault has been handled. Furthermore, the address translation engine on-demand paging (ATE ODP) driver 382 may also issue interrupts to the virtual machine (VM) 304 to process completions once the data has been stored in the newly allocated physical memory. In addition, the address translation engine on-demand paging (ATE ODP) driver 382 or a component of the peripheral device 308 (e.g., the device memory management unit (devMMU) 360) may issue a further request (not shown) to the input/output memory management unit (IOMMU) 368 to pre-populate the page information into the input/output translation lookaside buffer (IOTLB) 366. This may avoid a possible page walk due to a TLB miss in the future.

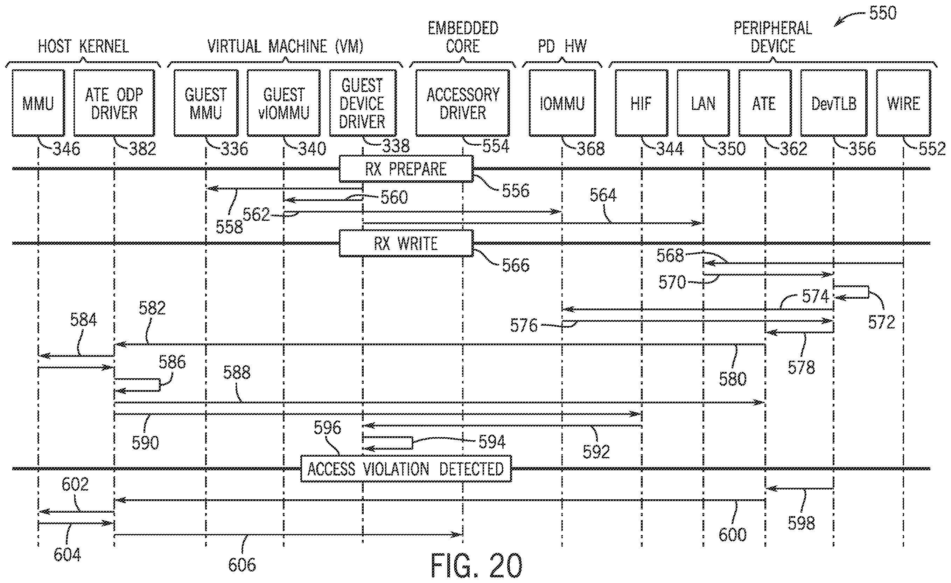

This process may be applied in numerous use cases with different types of peripheral devices. These include a network interface card (NIC), a storage device such as non-volatile memory (e.g., an NVM Express device), a cryptographic engine (e.g., Look-Aside Crypto), a compression engine, a remote direct memory access (RDMA) device, to name just a few. One specific use case is shown by a communication diagram 550 in FIG. 20, which illustrates the use of on-demand device-assisted paging upon receipt of a data packet by a smart network interface card (NIC). The communication diagram 550 illustrates an example set of interactions between the peripheral device (physical network wiring 552, the device translation lookaside buffer (devTLB) 356, the address translation engine (ATE) 362, local area network (LAN) interface circuitry 350, and the host interface (HIF) 344), hardware of the processing device (the input/output memory management unit (IOMMU) 368), an embedded core (an accessory driver 554), the virtual machine (the guest device driver 338, the guest virtual input/output memory management unit (vIOMMU) 340, and the guest MMU 336) and the host kernel (the address translation engine on-demand paging (ATE ODP) driver 382 and the memory management unit (MMU) 355).

The communication diagram 550 begins as the virtual machine begins an operation 556 prepares to receive a packet or stream of packets from the smart NIC. The guest device driver 338 (e.g., a guest LAN driver) may allocate DMA memory for the receipt of the packet and may pin, in the guest MMU 336, the guest virtual address (GVA) to the guest physical address (GPA) (message 558). The guest device driver 338 may also map the GVA to GPA in the guest virtual input/output memory management unit (vIOMMU) 340 (message 560). The guest virtual input/output memory management unit (vIOMMU) 340 may issue a request to the input/output memory management unit (IOMMU) 368 to create an extended page table (EPT) page table entry that may be unpinned without a physical page allocation (message 562). The guest device driver 338 may post the GPA (e.g., a tail bump) at the LAN interface circuitry 350 (message 564).

To handle the incoming packet, a receive (RX) write operation 566 may begin as the packet arrives on the physical network wiring 552 from which it is taken in by the LAN interface circuitry 350 (message 568). The LAN interface circuitry 350 may issue an address translation request to the device translation lookaside buffer (devTLB) 356 (message 570). In this example, the device translation lookaside buffer (devTLB) 356 does not have the translation, so the device translation lookaside buffer (devTLB) 356 generates a cache miss (message 572). The device translation lookaside buffer (devTLB) 356 therefore issues an address translation request via Address Translation Service (ATS) to the input/output memory management unit (IOMMU) 368 (message 574). If the input/output memory management unit (IOMMU) 368 also lacks the translation, the input/output memory management unit (IOMMU) 368 replies with an indication that a page fault has been detected (although the hardware may be unable to identify which type of page fault has been detected (e.g., entry missing, page missing or access violation)) (message 576).

When the page fault is due to true overprovisioning (e.g., rather than due to malicious activity or a missing entry), the device translation lookaside buffer (devTLB) 356 may indicate the page fault to the address translation engine (ATE) 362 (message 578). The address translation engine (ATE) 362 or other components of the peripheral device (e.g., a protocol engine (PE) 342 as shown in FIG. 16) post the payload in fault buffers and write corresponding descriptors into the fault buffer queue and I/O page fault queue. The address translation engine (ATE) 362 may notify the address translation engine on-demand paging (ATE ODP) driver 382 with an indication of an I/O page fault (IPF) event (message 580).

The address translation engine on-demand paging (ATE ODP) driver 382 may issue a request to the memory management unit (MMU) 355 to handle the page fault (e.g., to find a host physical address (HPA) for the corresponding guest physical address (GPA) that has been allocated in the virtual machine but which resulted in a page fault due to not being allocated in host physical memory) (message 582). Once the memory management unit (MMU) 355 handles the page fault, the memory management unit (MMU) 355 may respond with an indication that the page fault has been successfully handled (message 584). The address translation engine on-demand paging (ATE ODP) driver 382 writes the contents of the fault buffer to the physical memory corresponding to the guest physical address (GPA) that has now been allocated (message 586). For instance, the address translation engine on-demand paging (ATE ODP) driver 382 may issue a call on behalf of the virtual machine manager (VMM) 332 or to the virtual machine manager (VMM) 332 such as kvm_write_user() using the GPA. The address translation engine on-demand paging (ATE ODP) driver 382 may reply to the address translation engine (ATE) 362 when this is complete to indicate that the I/O page fault (IPF) has been resolved and the page fault has been handled (message 588). The address translation engine on-demand paging (ATE ODP) driver 382 may also generate a packet receive event (e.g., by writing to a Message Signaled Interrupt- Extensions (MSIX) register such as SW_triggered_MSIX_Interrupt_Register) to the HIF 344 to indicate that the packet has been written to its proper destination (message 590). The HIF 344 may issue a packet receive event handling message to the guest device driver 338 (message 592), allowing the guest device driver 338 to process the packet (message 594).

The system may also be able to respond appropriately in the case of a malicious device activity when an access violation is detected at operation 596. Under these conditions, the device translation lookaside buffer (devTLB) 356 may indicate the page fault to the address translation engine (ATE) 362 and noting that it is due to an access violation (which could be due to malicious activity) (message 598). The address translation engine (ATE) 362 or other components of the peripheral device (e.g., a protocol engine (PE) 342 as shown in FIG. 16) post the payload in fault buffers and write corresponding descriptors into the fault buffer queue and I/O page fault queue. The address translation engine (ATE) 362 may notify the address translation engine on-demand paging (ATE ODP) driver 382 with an indication of an I/O page fault (IPF) event (message 600).

The address translation engine on-demand paging (ATE ODP) driver 382 may issue a request to the memory management unit (MMU) 355 to handle the page fault (e.g., to find a host physical address (HPA) for the corresponding guest physical address (GPA) that resulted in a page fault) (message 602). When the memory management unit (MMU) 355 attempts to handle the page fault, the memory management unit (MMU) 355 may identify that the page fault is due to an access violation and may respond with such an indication (message 604). The address translation engine on-demand paging (ATE ODP) driver 382 may issue a request to log the potential malicious activity and trigger a PCIe function reset (message 606).

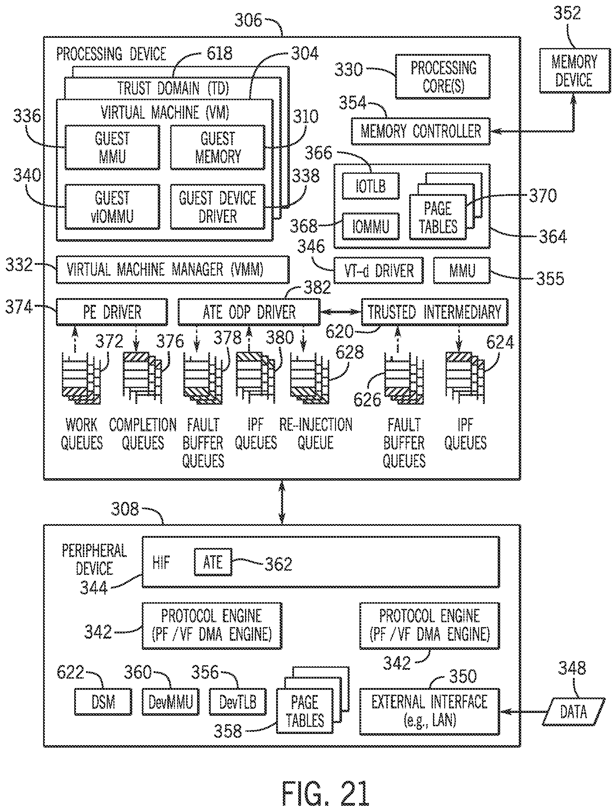

On-demand device-assisted paging may also be performed with peripheral devices with enhanced security features. In an example shown in FIG. 21, the peripheral device 308 may interface securely with a secure virtual machine such as a trust domain (TD) 618. In FIG. 21, all elements illustrated but not described here should be understood to function in a manner discussed above. Regarding the trust domain (TD) 618, any suitable trusted virtual machine security schemes may be used, such as Intel^{®} Trust Domain Extensions (TDX) by Intel Corporation. These security features may isolate TDs 618 from each other, other virtual machines (VMs) 304, the virtual-machine manager (VMM) 332, and any other non-TD software on the platform to protect TDs 618 from a broad range of software. The peripheral device 308 may interface with the trust domain (TD) 618 through a trusted intermediary 620 (e.g., a TDX Module by Intel Corporation, a TDXio (a trusted execution environment (TEE) Security Manager) module). Trusted virtual machine security schemes may be used with on-demand device-assisted paging by the peripheral device 308 maintaining context information (e.g., process address space ID (PASID) and/or bus/device/function (BDF)) per interface (e.g., different protocol engines 342 or different host interfaces (HIFs) 344) on whether the interface belongs to a trust domain (TD) 618 or not. This may be configured by a Device Security Manager (DSM) 622 running on the peripheral device 308. The peripheral device 308 may not be aware of which trust domain (TD) 618 that a particular interface belongs to as that may be handled by the trusted intermediary 620. Even so, the peripheral device 308 may segregate the page faults into sets corresponding to TDs 618 and to virtual machines (VMs) 304.

Page faults related to virtual machines (VMs) 304 may be handled by the address translation engine on-demand paging (ATE ODP) driver 382 in the manner discussed above. Page faults related to TDs 618 may be routed through and handled by the trusted intermediary 620. For example, the trusted intermediary 620 may have access to a separate set of trusted I/O page fault (TIPF) queues 624 and trusted fault buffer queues 626 that operate for page faults for TDs 618 in the same manner as the I/O page fault (IPF) queues 380 and fault buffer queues 378 do for virtual machines (VMs) 304. For additional security, the trusted fault buffer queues 626 may be managed by the trusted intermediary as private memory donated by the virtual machine manager (VMM) 332 at the initiation of the peripheral device 308. Trusted physical functions (PFs) or virtual functions (VFs) of the TDs 618 (e.g., a protocol engine (PE) 342 associated with a trust domain (TD) 618) may use the trusted fault buffer queues 626 for redirection of incoming data 348 when there is a page fault. The trusted intermediary 620 may handle the page fault for the trust domain (TD) 618 in substantially the same way that the address translation engine on-demand paging (ATE ODP) driver 382 does for a virtual machine (VM) 304. Upon completion, the trusted intermediary 620 may inform the address translation engine on-demand paging (ATE ODP) driver 382 that a page fault has been handled, which may acknowledge that page fault processing is complete by writing a descriptor to a re-injection queue 628. By performing on-demand device-assisted page fault handling, greater memory efficiency may be reached in virtualized datacenters with virtual machines (VMs) 304 as well as trusted domains (TDs) 618.

## Claims

1. A system comprising:
a peripheral device (308);
a processing device (306) to run a virtual machine (304), and
guest memory (310) allocated to the virtual machine (304),
wherein the processing device (306) comprises a buffer allocated to receive a payload from the peripheral device (308) that attempts to access a page of the guest memory (310) of the virtual machine (304) using direct memory access, DMA, in case that the DMA results in an input/output page fault,
wherein the buffer stores the payload while the input/output page fault corresponding to the page of the guest memory (310) of the virtual machine is resolved,
wherein the processing device (306) is configured to
receive, from the peripheral device (308), a descriptor indicating a location of the buffer into a fault buffer queue; and
cause the payload to be copied from the buffer to a newly allocated page of the guest memory (310) after the input/output page fault is resolved by using the descriptor from the fault buffer queue.

2. The system of claim 1, wherein the processing device (306) is configured to run a driver to request resolution of the input/output page fault.

3. The system of claim 2, wherein the processing device (306) is configured to run a virtual machine manager to manage the virtual machine (304), wherein the driver is configured to cause the payload to be copied by issuing a call to the virtual machine manager.

4. The system of claim 2, wherein the driver running on the processing device (306), after the input/output page fault is resolved, is configured to provide an indication to the peripheral device (308) that the input/output page fault is resolved to enable the peripheral device (308) to access the page of the guest memory (310).

5. The system of claim 2, wherein the driver is to communicate with an address translation engine of the peripheral device (308) using Address Translation Service, ATS, messages.

6. The system of claim 1, wherein the processing device (306) comprises:
an input/output page fault queue configured to store a descriptor corresponding to the input/output page fault.

7. The system of claim 6, wherein the input/output page fault queue and the fault buffer queue are pinned.

8. The system of claim 6, wherein the peripheral device (308), in response to a direct memory access, DMA, attempt that results in the input/output page fault, is to:
write the descriptor to the input/output page fault queue corresponding to the input/output page fault; and
write the descriptor to the fault buffer queue corresponding to the location of the buffer.

9. The system of claim 8, wherein the peripheral device (308), in response to a DMA attempt to store another payload that results in another input/output page fault corresponding to another guest memory of another virtual machine is configured to:
write another descriptor to the input/output page fault queue corresponding to the other input/output page fault;
store the other payload in another buffer; and
write another descriptor to the fault buffer queue corresponding to the location of the other buffer.

10. The system of claim 1, wherein the processing device (306) is configured to run a plurality of other virtual machines, at least one of which has other guest memory that is overcommitted with the guest memory (310).

11. A method in a processing device running a virtual machine, comprising:
receiving, from a peripheral device that attempts to access a page of guest memory of the virtual machine using direct memory access, DMA, a payload into a buffer, in case that the DMA results in an input/output page fault;
storing, in the buffer, the payload while the input/output page fault corresponding to the page of the guest memory of the virtual machine is resolved;
receiving, from the peripheral device, a descriptor indicating a location of the buffer into a fault buffer queue; and
causing the payload to be copied from the buffer to a newly allocated page of the guest memory after the input/output page fault is resolved by using the descriptor from the fault buffer queue.

12. The method of claim 11, further comprising receiving, from the peripheral device, a descriptor indicating that the input/output page fault corresponding to the payload has occurred to an input/output page fault queue.

13. The method of claim 12, wherein further comprising copying the payload to a guest physical address, GPA, of memory of the virtual machine indicated in the descriptor in the input/output page fault queue.

14. The method of claim 13, further comprising copying the payload using a virtual machine manager.

15. An article of manufacture comprising one or more tangible, non-transitory machine-readable media comprising instructions that, when executed by a processing device, cause the processing device to perform a method according to any one of the claims 11 to 14.

## Patentansprüche

1. System, das Folgendes umfasst:
eine Peripherievorrichtung (308);
eine Verarbeitungsvorrichtung (306) zum Ausführen einer virtuellen Maschine (304), und
Gastspeicher (310), der der virtuellen Maschine (304) zugewiesen ist,
wobei die Verarbeitungsvorrichtung (306) einen Puffer umfasst, der zugewiesen ist, um Nutzdaten von der Peripherievorrichtung (308) zu empfangen, die versucht, auf eine Seite des Gastspeichers (310) der virtuellen Maschine (304) unter Verwendung von direktem Speicherzugriff (DMA) zuzugreifen, für den Fall, dass der DMA zu einem Eingabe/Ausgabe-Seitenfehler führt,
wobei der Puffer die Nutzdaten speichert, während der Eingabe/Ausgabe-Seitenfehler, der der Seite des Gastspeichers (310) der virtuellen Maschine entspricht, behoben wird,
wobei die Verarbeitungsvorrichtung (306) für Folgendes ausgebildet ist:
Empfangen, von der Peripherievorrichtung (308), eines Deskriptors, der einen Ort des Puffers in einer Fehlerpuffer-Warteschlange angibt; und
Veranlassen, dass die Nutzdaten aus dem Puffer auf eine neu zugewiesene Seite des Gastspeichers (310) kopiert werden, nachdem der Eingabe/Ausgabe-Seitenfehler durch Verwenden des Deskriptors aus der Fehlerpuffer-Warteschlange behoben wurde.

2. System nach Anspruch 1, wobei die Verarbeitungsvorrichtung (306) dafür ausgebildet ist, einen Treiber auszuführen, um die Auflösung des Eingabe/Ausgabe-Seitenfehlers anzufordern.

3. System nach Anspruch 2, wobei die Verarbeitungsvorrichtung (306) ausgebildet ist, um einen Verwalter einer virtuellen Maschine auszuführen, um die virtuelle Maschine (304) zu verwalten, wobei der Treiber ausgebildet ist, um das Kopieren der Nutzdaten zu veranlassen, indem er einen Aufruf an den Verwalter der virtuellen Maschine ausgibt.

4. System nach Anspruch 2, wobei der auf der Verarbeitungsvorrichtung (306) laufende Treiber, nachdem der Eingabe/Ausgabe-Seitenfehler behoben ist, dafür ausgebildet ist, der Peripherievorrichtung (308) eine Angabe bereitzustellen, dass der Eingabe/Ausgabe-Seitenfehler behoben ist, um der Peripherievorrichtung (308) den Zugriff auf die Seite des Gastspeichers (310) zu ermöglichen.

5. System nach Anspruch 2, wobei der Treiber mit einer Adressübersetzungsmaschine der Peripherievorrichtung (308) unter Verwendung von ATS-Nachrichten (Address Translation Service) kommunizieren soll.

6. System nach Anspruch 1, wobei die Verarbeitungsvorrichtung (306) Folgendes umfasst:
eine Eingabe/Ausgabe-Seitenfehler-Warteschlange, die dafür ausgebildet ist, einen dem Eingabe/Ausgabe-Seitenfehler entsprechenden Deskriptor zu speichern.

7. System nach Anspruch 6, wobei die Eingabe/Ausgabe-Seitenfehler-Warteschlange und die Fehlerpuffer-Warteschlange gepinnt sind.

8. System nach Anspruch 6, wobei die Peripherievorrichtung (308) als Reaktion auf einen Versuch eines direkten Speicherzugriffs (DMA), der zu dem Eingabe/Ausgabe-Seitenfehler führt, Folgendes tut:
Schreiben des Deskriptors in die Eingabe/Ausgabe-Seitenfehler-Warteschlange, die dem Eingabe/Ausgabe-Seitenfehler entspricht; und
Schreiben des Deskriptors in die Fehlerpuffer-Warteschlange, die dem Ort des Puffers entspricht.

9. System nach Anspruch 8, wobei die Peripherievorrichtung (308) in Reaktion auf einen DMA-Versuch, andere Nutzdaten zu speichern, die zu einem anderen Eingabe/Ausgabe-Seitenfehler führen, der einem anderen Gastspeicher einer anderen virtuellen Maschine entspricht, für Folgendes ausgebildet ist:
Schreiben eines weiteren Deskriptors in die Eingabe/Ausgabe-Seitenfehler-Warteschlange, die dem anderen Eingabe/Ausgabe-Seitenfehler entspricht;
Speichern der anderen Nutzdaten in einem anderen Puffer; und
Schreiben eines weiteren Deskriptors in die Fehlerpuffer-Warteschlange, die dem Ort des anderen Puffers entspricht.

10. System nach Anspruch 1, wobei die Verarbeitungsvorrichtung (306) dafür ausgebildet ist, eine Vielzahl anderer virtueller Maschinen auszuführen, von denen mindestens eine einen anderen Gastspeicher hat, der mit dem Gastspeicher (310) überbelegt ist.

11. Verfahren in einer Verarbeitungsvorrichtung, auf der eine virtuelle Maschine läuft, das Folgendes umfasst:
Empfangen, von einer Peripherievorrichtung, die versucht, auf eine Seite des Gastspeichers der virtuellen Maschine zuzugreifen, indem sie direkten Speicherzugriff (DMA) verwendet, von Nutzdaten in einem Puffer, für den Fall, dass der DMA zu einem Eingabe/Ausgabe-Seitenfehler führt;
Speichern, im Puffer, der Nutzdaten, während der Eingabe/Ausgabe-Seitenfehler, der der Seite des Gastspeichers der virtuellen Maschine entspricht, behoben wird;
Empfangen, von der Peripherievorrichtung, eines Deskriptors, der einen Ort des Puffers in einer Fehlerpuffer-Warteschlange angibt; und
Veranlassen, dass die Nutzdaten aus dem Puffer in eine neu zugewiesene Seite des Gastspeichers kopiert werden, nachdem der Eingabe/Ausgabe-Seitenfehler durch Verwenden des Deskriptors aus der Fehlerpuffer-Warteschlange behoben wurde.

12. Verfahren nach Anspruch 11, das ferner das Empfangen eines Deskriptors von der Peripherievorrichtung umfasst, der anzeigt, dass der Eingabe/Ausgabe-Seitenfehler, der den Nutzdaten entspricht, in einer Eingabe/Ausgabe-Seitenfehler-Warteschlange aufgetreten ist.

13. Verfahren nach Anspruch 12, wobei das Verfahren ferner das Kopieren der Nutzdaten in eine physikalische Gastadresse (GPA) des Speichers der virtuellen Maschine umfasst, die im Deskriptor in der Eingabe/Ausgabe-Seitenfehler-Warteschlange angegeben ist.

14. Verfahren nach Anspruch 13, das ferner das Kopieren der Nutzdaten unter Verwendung eines virtuellen Maschinenmanagers umfasst.

15. Herstellungsgegenstand, der ein oder mehrere greifbare, nichtflüchtige maschinenlesbare Medien umfasst, die Anweisungen umfassen, die, wenn sie von einer Verarbeitungsvorrichtung ausgeführt werden, die Verarbeitungsvorrichtung veranlassen, ein Verfahren nach einem der Ansprüche 11 bis 14 durchzuführen.

## Revendications

1. Système comprenant :
un dispositif périphérique (308) ;
un dispositif de traitement (306) pour exécuter une machine virtuelle (304), et
une mémoire d'invité (310) allouée à la machine virtuelle (304),
où le dispositif de traitement (306) comprend un tampon alloué pour recevoir une charge utile du dispositif périphérique (308) qui tente d'accéder à une page de la mémoire d'invité (310) de la machine virtuelle (304) à l'aide d'un accès direct à la mémoire, DMA, au cas où le DMA entraînerait un défaut de page d'entrée/sortie,
où le tampon stocke la charge utile pendant que le défaut de page d'entrée/sortie correspondant à la page de la mémoire d'invité (310) de la machine virtuelle est résolu,
où le dispositif de traitement (306) est configuré pour :
recevoir, en provenance du dispositif périphérique (308), un descripteur indiquant l'emplacement de la mémoire tampon dans une file d'attente de mémoire tampon de défauts ; et
faire en sorte que la charge utile soit copiée de la mémoire tampon vers une page nouvellement allouée de la mémoire d'invité (310) une fois que le défaut de page d'entrée/sortie a été résolu en utilisant le descripteur de la file d'attente de mémoire tampon de défauts.

2. Système selon la revendication 1, dans lequel le dispositif de traitement (306) est configuré pour exécuter un pilote afin de demander la résolution du défaut de page d'entrée/sortie.

3. Système selon la revendication 2, dans lequel le dispositif de traitement (306) est configuré pour exécuter un gestionnaire de machine virtuelle pour gérer la machine virtuelle (304), où le pilote est configuré pour provoquer la copie de la charge utile en émettant un appel au gestionnaire de machine virtuelle.

4. Système selon la revendication 2, dans lequel le pilote fonctionnant sur le dispositif de traitement (306), après que le défaut de page d'entrée/sortie a été résolu, est configuré pour fournir une indication au dispositif périphérique (308) que le défaut de page d'entrée/sortie est résolu pour permettre au dispositif périphérique (308) d'accéder à la page de la mémoire d'invité (310).

5. Système selon la revendication 2, dans lequel le pilote doit communiquer avec un moteur de traduction d'adresse du dispositif périphérique (308) à l'aide de messages ATS, Address Translation Service.

6. Système selon la revendication 1, dans lequel le dispositif de traitement (306) comprend :
une file d'attente de défauts de page d'entrée/sortie configurée pour stocker un descripteur correspondant au défaut de page d'entrée/sortie.

7. Système selon la revendication 6, dans lequel la file d'attente de défauts de page d'entrée/sortie et la file d'attente du tampon de défauts sont épinglées.

8. Système selon la revendication 6, dans lequel le dispositif périphérique (308), en réponse à une tentative d'accès direct à la mémoire, DMA, qui conduit au défaut de page d'entrée/sortie, doit :
écrire le descripteur dans la file d'attente de défauts de page d'entrée/sortie correspondant au défaut de page d'entrée/sortie ; et
écrire le descripteur dans la file d'attente de tampon de défauts correspondant à l'emplacement du tampon.

9. Système selon la revendication 8, dans lequel le dispositif périphérique (308), en réponse à une tentative DMA de stockage d'une autre charge utile qui entraîne un autre défaut de page d'entrée/sortie correspondant à une autre mémoire d'invité d'une autre machine virtuelle, est configuré pour :
écrire un autre descripteur dans la file d'attente de défauts de page d'entrée/sortie correspondant à l'autre défaut de page d'entrée/sortie ;
stocker l'autre charge utile dans un autre tampon ; et
écrire un autre descripteur dans la file d'attente de défauts de page correspondant à l'emplacement de l'autre tampon.

10. Système selon la revendication 1, dans lequel le dispositif de traitement (306) est configuré pour exécuter une pluralité d'autres machines virtuelles, dont au moins une a une autre mémoire d'invité qui est sur-engagée avec la mémoire d'invité (310).

11. Procédé dans un dispositif de traitement exécutant une machine virtuelle, comprenant les étapes suivantes :
recevoir, en provenance d'un dispositif périphérique qui tente d'accéder à une page de la mémoire d'invité de la machine virtuelle en utilisant un accès direct à la mémoire, DMA, une charge utile dans un tampon, dans le cas où le DMA conduit à un défaut de page d'entrée/sortie ;
stocker, dans la mémoire tampon, la charge utile pendant que le défaut de page d'entrée/sortie correspondant à la page de la mémoire d'invité de la machine virtuelle est résolu ;
recevoir, en provenance du dispositif périphérique, un descripteur indiquant l'emplacement de la mémoire tampon dans une file d'attente de mémoire tampon de défauts ; et
faire en sorte que la charge utile soit copiée de la mémoire tampon vers une page nouvellement allouée de la mémoire d'invité une fois que le défaut de page d'entrée/sortie a été résolu en utilisant le descripteur de la file d'attente de mémoire tampon d'erreur.

12. Procédé selon la revendication 11, comprenant en outre de recevoir, en provenance du dispositif périphérique, un descripteur indiquant que le défaut de page d'entrée/sortie correspondant à la charge utile s'est produit dans une file d'attente de défaut de page d'entrée/sortie.

13. Procédé selon la revendication 12, comprenant en outre de copier la charge utile à une adresse physique d'invité, GPA, de la mémoire de la machine virtuelle indiquée dans le descripteur dans la file d'attente de défauts de page d'entrée/sortie.

14. Procédé selon la revendication 13, comprenant en outre de copier la charge utile à l'aide d'un gestionnaire de machine virtuelle.

15. Article manufacturé comprenant un ou plusieurs supports tangibles, non transitoires, lisibles par une machine, comprenant des instructions qui, lorsqu'elles sont exécutées par un dispositif de traitement, amènent le dispositif de traitement à exécuter un procédé selon l'une quelconque des revendications 11 à 14.
